# EUROPEAN PATENT APPLICATION

(11) **EP 4 324 869 A1**
(43) Date of publication of application: **21.02.2024**
(21) Application number: 22788226.3
(22) Date of filing: 18.04.2022
(51) Int. Cl.: C08J 5/04, C08K 3/016, C08K 3/32, C08K 5/49, C08K 7/02, C08K 7/04, C08L 23/10, C08L 23/26, C08L 101/00, H01M 50/202, H01M 50/204, H01M 50/249

(54) **STAMPABLE SHEET AND MOLDED BODY USING SAME**

(30) Priority: 16.04.2021 JP 2021069976; 16.04.2021 JP 2021069978
(71) Applicant: Mitsubishi Chemical Corporation, Chiyoda-ku Tokyo 100-8251 (JP)
(72) Inventor: TAKATA, Nobuaki, Tokyo 100-8251 (JP); YANO, Akihiro, Tokyo 100-8251 (JP); SHIRAKU, Hideyuki, Tokyo 100-8251 (JP); KAWAHARA, Kazunori, Tokyo 100-8251 (JP)
(74) Representative: Vossius & Partner Patentanwälte Rechtsanwälte mbB
(86) International application number: PCT/JP2022/018080
(87) International publication number: WO 2022/220303

(57) **Abstract**

Provided is a stampable sheet containing (A) a thermoplastic resin, (B) a flame retardant, (C) a dispersant, and (D) an inorganic fiber, wherein the content of the (D) inorganic fiber is 1 to 80% by mass based the total weight, and based on 100 parts by mass of the (B) flame retardant, the content of the (C) dispersant is more than 0 and 25 parts by mass or less. According to the present invention, it is possible to provide a stampable sheet which is excellent in strength, rigidity and flame shielding performance, and which is also excellent in workability such as stamping molding.

## Description

### Technical Field

The present invention relates to a stampable sheet and a molded article using the stampable sheet.

### Background Art

In recent years, as part of environmental measures, research and development of electric vehicles and hybrid vehicles have been promoted, and high energy density battery development and weight reduction are actively promoted with an aim of improving cruising range. Such high energy density batteries may catch fire in an accident, and as a safety measure for passengers, the housing materials thereof are required to have high flame shielding performance. Therefore, in many cases, metal materials such as iron and fire-resistant materials are used together.

However, metal materials have the disadvantage of being heavy, and when fire-resistant materials are used together, the cost increases due to workability and an increase in the number of parts. Therefore, attempts have been made to use a resin that has the potential to achieve both weight reduction and flame shielding performance. At present, reduction of carbon dioxide and recyclability are being emphasized toward a sustainable society. Many thermosetting materials have high flame retardancy and are commonly used as composite materials; however, thermoplastic resin materials are advantageous in terms of recyclability.

Also, in China, a safety standard called GB 38031-2020 "Electric Vehicles Traction Battery Safety Requirements" has been announced, and it is obligatory to issue a warning five minutes before the thermal runaway of the battery. It is believed that this can also be achieved with a housing material that provides flame protection for 5 minutes or longer after ignition of the battery.

In order to solve these problems, PTL 1, for example, proposes a product in which a brominated flame retardant or an antimony oxide compound is added to a carbon fiber reinforced polypropylene resin. However, the additive used here has a problem of biopersistence.

On the other hand, as a technique for making a polypropylene-based resin flame-retardant in consideration of biopersistence, PTL 2 proposes a flame-retardant polyolefin-based composition in which a polyolefin-based resin contains a (poly)phosphate compound. However, the resin composition described therein has a problem that the dispersibility of the phosphorus-based flame retardant is poor.

Further, PTL 3 proposes a flame-retardant resin composition containing a long glass fiber and a phosphate compound in a polypropylene resin. However, similar to PTL 2, it is necessary to contain a large amount of phosphorus-based flame retardant, and there is a problem with the dispersibility of the phosphorus-based flame retardant.

### Citation List

### Patent Literature

PTL 1: JP 2014-62189 A
PTL 2: JP 2013-119575 A
PTL 3: JP 2011-88970 A

### Summary of Invention

### Technical Problem

As described above, conventional techniques have many inadequacies with respect to resinification, which has the potential to achieve both weight reduction and flame shielding performance for high energy density batteries. Specifically, in the carbon fiber reinforced polypropylene resin composition disclosed in PTL 1, the additive used has a problem of biopersistence, and there is a problem that sufficient strength and rigidity cannot be obtained after stamp molding with the carbon fiber length shown in PTL 1.

In addition, in the resin composition disclosed in PTL 2, the dispersibility of the phosphorus-based flame retardant is poor. Although flame retardancy can be obtained by adding a large amount of the phosphorus-based flame retardant, there is a problem that the strength of the polypropylene-based resin is greatly reduced. Further, when a large amount of flame retardant is contained in a stampable sheet material, there is a problem that molding defects (unfilled molding) tend to occur during stamp molding.

Furthermore, similar to PTL 2, the flame-retardant resin composition disclosed in PTL 3 must contain a large amount of a phosphorus-based flame retardant, and there is a problem that the mechanical properties as a stampable sheet and the fluidity during stamp molding cannot be maintained.

A first aspect of the present invention was made to solve the above problems, and an object is to provide a stampable sheet that achieves both high flame shielding performance and workability and rigidity required for a stampable sheet. In addition, an object of a second aspect of the present invention is to provide a battery housing made of a fiber-reinforced resin, capable of delaying the spread of fire to an automobile interior member when thermal runaway of a battery occurs and flame is generated, and having excellent flame shielding performance.

### Solution to Problem

In order to solve the above-mentioned problems, the present inventors have found that the above-mentioned problems can be solved by a stampable sheet made of a composition of an inorganic fiber and a polypropylene-based resin containing a flame retardant and a dispersant in a specific ratio in a specific polypropylene-based resin, and based on these findings, have completed the first aspect of the present invention. In addition, the present inventors have found that a battery housing using a fiber-reinforced resin containing at least an inorganic fiber can solve the above problems, and based on these findings, have completed one aspect of the present invention.

That is, the first aspect of the present invention provides the following [A1] to [A28].
[A1] A stampable sheet containing (A) a thermoplastic resin, (B) a flame retardant, (C) a dispersant, and (D) an inorganic fiber, in which the (D) inorganic fiber has a content of 1 to 80% by mass based on a total weight, and the (C) dispersant has a content of more than 0 and 25 parts by mass or less, based on 100 parts by mass of the (B) flame retardant.
[A2] The stampable sheet according to [A1], in which the (C) dispersant is a copolymer of an α-olefin and an unsaturated carboxylic acid.
[A3] The stampable sheet according to [A1] or [A2], in which the (B) flame retardant is a phosphorus-based flame retardant.
[A4] The stampable sheet according to any one of [A1] to [A3], in which the (B) flame retardant is an intumescent flame retardant.
[A5] The stampable sheet according to any one of [A1] to [A4], in which the (D) inorganic fiber has an average fiber length of 0.1 mm or more.
[A6] The stampable sheet according to any one of [A1] to [A5], in which the (D) inorganic fiber is at least one selected from glass fiber, ceramic fiber, metal fiber and metal oxide fiber.
[A7] The stampable sheet according to any one of [A1] to [A6], in which the (A) thermoplastic resin is (A-1) a polypropylene-based resin, and the polypropylene-based resin has a content of 15 to 80% by mass based on the total weight.
[A8] The stampable sheet according to any one of [A1] to [A7], in which the (B) flame retardant has a content of 1 to 30% by mass based on the total weight.
[A9] The stampable sheet according to any one of [A1] to [A8], obtained by impregnating a mat consisting of the (D) inorganic fiber with a resin composition containing the (A) thermoplastic resin, the (B) flame retardant, and the (C) dispersant.
[A10] The stampable sheet according to [A9], in which the mat is produced by needle punching a swirl (spiral) mat of a continuous glass or inorganic fiber.
[A11] A molded article obtained by stamping the stampable sheet according to any one of [A1] to [A10].
[A12] A battery housing made of the molded article according to [A11].
[A13] A stampable sheet containing (A-1) a polypropylene-based resin, (B) a flame retardant, (C) a dispersant, and (D) an inorganic fiber, in which the (A-1) polypropylene-based resin has a content of 15 to 80% by mass, the (B) flame retardant has a content of 1 to 30% by mass, the (D) inorganic fiber has a content of 3 to 60% by mass, and based on 100 parts by mass of the (B) flame retardant, the (C) dispersant has a content of 0.01 to 10 parts by mass.
[A14] The stampable sheet according to [A13], in which the flame retardant (B) is a phosphorus-based flame retardant.
[A15] The stampable sheet according to [A13] or [A14], in which the (B) flame retardant is an intumescent flame retardant.
[A16] The stampable sheet according to any one of [A13] to [A15], in which the (D) inorganic fiber has an average fiber length of 0.1 mm or more.
[A17] The stampable sheet according to any one of [A13] to [A16], in which the (D) inorganic fiber is at least one selected from glass fiber, ceramic fiber, metal fiber and metal oxide fiber.
[A18] The stampable sheet according to any one of [A13] to [A17], obtained by impregnating a mat consisting of the (D) inorganic fiber with a resin composition containing the (A-1) propylene-based resin, the (B) flame retardant, and the (C) dispersant.
[A19] The stampable sheet according to [A18], in which the mat is produced by needle punching a swirl (spiral) mat of a continuous glass or inorganic fiber.
[A20] A molded article obtained by stamping the stampable sheet according to any one of [A13] to [A19].
[A21] A battery housing made of the molded article according to [A20].
[A22] A stampable sheet containing (A) a propylene-based resin, (B) a salt of a (poly)phosphoric acid and a nitrogen compound, (C) a copolymer of an α-olefin and an unsaturated carboxylic acid, and (D) an inorganic fiber, in which the (D) inorganic fiber has a content of 1 to 80% by mass based on a total weight, and the component (C) has a content of more than 0 and 25 parts by mass or less, based on 100 parts by mass of the component (B).
[A23] The stampable sheet according to [A22], in which the (D) inorganic fiber has an average fiber length of 0.1 mm or more.
[A24] The stampable sheet according to [A22] or [A23], in which the (D) inorganic fiber is at least one selected from glass fiber, ceramic fiber, metal fiber and metal oxide fiber.
[A25] The stampable sheet according to any one of [A22] to [A24], obtained by impregnating a mat consisting of the (D) inorganic fiber with a resin composition containing the (A) propylene-based resin, the (B) salt of a (poly)phosphoric acid and a nitrogen compound, and the (C) copolymer of an α-olefin and an unsaturated carboxylic acid.
[A26] The stampable sheet according to [A25], in which the mat is produced by needle punching a swirl (spiral) mat of a continuous glass or inorganic fiber.
[A27] A molded article obtained by stamping the stampable sheet according to any one of [A22] to [A26].
[A28] A battery housing made of the molded article according to [A27].

In addition, the second aspect of the present invention provides the following [B1] to [B12].
[B1] A battery housing made of a fiber-reinforced resin, the fiber-reinforced resin containing a flame retardant and a dispersant, and containing at least an inorganic fiber as the fiber.
[B2] A battery housing made of a fiber-reinforced resin, the fiber-reinforced resin containing a flame retardant and a dispersant, and containing at least an inorganic fiber having a melting temperature of higher than 1000°C as the fiber.
[B3] The battery housing according to [B1] or [B2], in which the fiber include two or more kinds of inorganic fibers having different melting temperatures.
[B4] The battery according to any one of [B1] to [B3], in which the inorganic fiber having a melting temperature of higher than 1000°C has a content of 1 part by mass or more with respect to 100 parts by mass of the fiber-reinforced resin.
[B5] The battery housing according to any one of [B1] to [B4], in which the fiber-reinforced resin contains glass fibers.
[B6] The battery housing according to any one of [B1] to [B5], in which the resin in the fiber-reinforced resin is a thermoplastic resin.
[B7] The battery housing according to any one of [B1] to [B6], in which the resin in the fiber-reinforced resin is a thermosetting resin.
[B8] The battery housing according to any one of [B1] to [B7], in which the fiber-reinforced resin contains more than 0 and 25 parts by mass or less of a dispersant with respect to 100 parts by mass of the flame retardant.
[B9] The battery housing according to any one of [B1] to [B8], in which the fiber-reinforced resin contains 20 to 80% by mass of a thermoplastic resin or a thermosetting resin, 3 to 60% by mass of an inorganic fiber, 1 to 30% by mass of a flame retardant, and based on 100 parts by mass of the flame retardant, 0.1 to 20 parts by mass of a dispersant.
[B10] The battery housing according to any one of [B1] to [B9], formed by molding a stampable sheet made of the fiber-reinforced resin.
[B11] A structure having the battery housing according to any one of [B1] to [B10] and a battery cell.
[B12] An electric mobility including the structure according to [B11].

### Advantageous Effects of Invention

According to the first aspect of the present invention, it is possible to provide a stampable sheet which is excellent in strength, rigidity and flame shielding performance, and which is also excellent in workability such as stamping molding. According to the second aspect of the present invention, it is possible to provide a battery housing capable of delaying the spread of fire to an automobile interior member when thermal runaway of a battery occurs and flame is generated, and having excellent flame shielding performance.

### Brief Description of Drawings

Fig. 1 is a model view indicating a laminate of Example 1-1.
Fig. 2 is a model view indicating a laminate of Example 1-2.
Fig. 3 is a conceptual view illustrating a battery housing.
Fig. 4 is a model view indicating a stampable sheet of Example 2-1.

### Description of Embodiments

Embodiments of the present invention will be described in detail below. However, the following description is an example of the embodiments of the present invention, and the present invention is not limited to these contents.

### [Stampable Sheet]

The first aspect of the present invention relates to a stampable sheet. The stampable sheet of the present invention contains (A) a thermoplastic resin, (B) a flame retardant, (C) a dispersant, and (D) an inorganic fiber. In one preferred embodiment, the stampable sheet contains the (D) inorganic fiber at a high concentration, is strong in any direction due to lack of orientation, and has a flexural modulus of about 4 to 10 GPa. The stampable sheet of the present invention has high impact resistance and is, unlike metal, less likely to undergo permanent deformation due to external input. The stampable sheet of the present invention can be stamped (pressed) and molded. That is, in the present description, a "stampable sheet" refers to a sheet-shaped fiber-reinforced resin composite that contains a thermoplastic resin and a fiber and can be stamped (pressed) and molded.

Each component used in the present invention and the resulting stampable sheet will be described in detail below.

### <(A) Thermoplastic Resin>

The thermoplastic resin used for the stampable sheet of the present invention is not particularly limited, and examples thereof include a polyolefin resin, a polycarbonate resin, a polyester resin, an acrylonitrile styrene resin, an ABS resin, a polyamide resin, and a modified polyphenylene oxide. In addition, these may be used with one kind alone, and may also be used of two or more kinds thereof. For example, the thermoplastic resin (A) may be a composite resin of two or more of the aforementioned thermoplastic resins.

The polyolefin resin is not particularly limited, and examples thereof include the resins described later. The polyester resin is not particularly limited, and examples thereof include polybutylene terephthalate. The polyamide resin is not particularly limited, and examples thereof include nylon 66 and nylon 6.

Of these, the present invention is particularly useful when at least a polyolefin resin is included as the thermoplastic resin (A). In the present invention, a "polyolefin resin" means a resin in which the proportion of an olefin unit or a cycloolefin unit is 90 mol% or more with respect to 100 mol% of all structural units constituting the resin.

The proportion of the olefin unit or the cycloolefin unit to 100 mol% of all structural units constituting the polyolefin resin is preferably 95 mol% or more, and particularly preferably 98 mol% or more.

Examples of the polyolefin resin include an α-olefin polymer, such as polyethylene, polypropylene, polybutene, poly(3-methyl-1-butene), poly(3-methyl-1-pentene), and poly(4-methyl-1-pentene); an α-olefin copolymer, such as an ethylene-propylene block or random copolymer, an α-olefin-propylene block or random copolymer having 4 or more carbon atoms, an ethylene-methyl methacrylate copolymer, and an ethylene-vinyl acetate copolymer; and a cycloolefin polymer, such as polycyclohexene and polycyclopentene. Examples of the polyethylene include low-density polyethylene, linear low-density polyethylene, and high-density polyethylene. Examples of the polypropylene include isotactic polypropylene, syndiotactic polypropylene, hemiisotactic polypropylene, and stereoblock polypropylene. In the α-olefin-propylene block or random copolymer having 4 or more carbon atoms, examples of the α-olefin having 4 or more carbon atoms include butene, 3-methyl-I-butene, 3-methyl-1-pentene, and 4-methyl-1-pentene. These polyolefin resins may be used alone or in combination of two or more kinds thereof.

### (Melt Flow Rate (MFR))

The total melt flow rate (hereinafter sometimes abbreviated as MFR) (230°C, 2.16 kg load) of the (A) thermoplastic resin used in the present invention is preferably 40 to 500 g/10 minutes. In the case where the MFR is 40 g/10 minutes or more, no defect occurs when the stampable sheet is stamped and molded, and workability is not lowered. In addition, when the MFR is 500 g/10 minutes or less, burrs are not generated in the production of the stampable sheet. From the above viewpoints, MFR is preferably 50 to 400 g/10 minutes, more preferably 60 to 400 g/10 minutes, and still more preferably 70 to 300 g/10 minutes.

For the (A) thermoplastic resin, the MFR can be adjusted, for example, by controlling the hydrogen concentration during polymerization.

The MFR is a value measured in accordance with JIS K7210.

### (Content of (A) Thermoplastic Resin)

Although the content of the (A) thermoplastic resin in the stampable sheet of the present invention is not particularly limited, it is preferably 15 to 80% by mass. When the content of the thermoplastic resin is 15% by mass or more, the molding workability is particularly good, and molding of the stampable sheet is facilitated. On the other hand, when the content is 80% by mass or less, sufficient amounts of the flame retardant, the dispersant and the inorganic fiber can be contained, and good flame shielding performance can be obtained. From the above viewpoints, the content of the thermoplastic resin in the stampable sheet is preferably 35 to 70% by mass, and more preferably 40 to 60% by mass.

### <(A-1) Polypropylene-based Resin>

The (A) thermoplastic resin used in the stampable sheet of the present invention preferably contains a polypropylene-based resin. Examples of the polypropylene-based resin include a propylene homopolymer and a propylene-α-olefin copolymer. Here, the propylene-α-olefin copolymer may be either a random copolymer or a block copolymer.

### (α-olefin)

Examples of a-olefins constituting the copolymer include ethylene, 1-butene, 2-methyl-1-propene, 1-pentene, 2-methyl-1-butene, 3-methyl-1-butene, 1 -hexene, 2-ethyl-1-butene, 2,3-dimethyl-1-butene, 2-methyl-1-pentene, 3-methyl-1-pentene, 4-methyl-1-pentene, 3,3-dimethyl-1-butene, 1-heptene, methyl-1-hexene, dimethyl-1-pentene, ethyl-1-pentene, trimethyl-1-butene, and 1-octene. These may be used alone for copolymerization with propylene, or two or more thereof may be used for copolymerization with propylene. Of these, from the viewpoint of improving the impact resistance strength of the stampable sheet, ethylene or I-butene is preferable because the effect thereof is large, and ethylene is most preferable.

### (Propylene-ethylene Random Copolymer)

In the case of a random copolymer of propylene and ethylene, it preferably contains a propylene unit in an amount of 90 to 99.5% by mass of more, preferably 92 to 99% by mass, and preferably contains an ethylene unit in an amount of 0.5 to 10% by mass, more preferably 1 to 8% by mass. When the ethylene unit is equal to or more than the lower limit, the stampable sheet will have sufficient impact resistance strength, and when the ethylene unit is equal to or less than the upper limit, sufficient rigidity will be maintained.

The content of the propylene unit and the ethylene unit in the random copolymer of propylene and ethylene can be adjusted by controlling a composition ratio of propylene and ethylene during polymerization of the random copolymer of propylene and ethylene.

Further, the propylene content of the random copolymer of propylene and ethylene is a value measured using a cross fractionator, FT-IR, etc., and for the measurement conditions and the like, a method described in, for example, JP 2008-189893 A may be used.

### (Melt Flow Rate (MFR))

The overall melt flow rate (hereinafter sometimes abbreviated as MFR) (230°C, 2.16 kg load) of the (A) polypropylene-based resin used in the present invention is preferably 40 to 500 g/10 minutes. In the case where the MFR is 40 g/10 minutes or more, no defect occurs when the stampable sheet is stamped and molded, and workability is not lowered. In addition, when the MFR is 500 g/10 minutes or less, burrs are not generated in the production of the stampable sheet. From the above viewpoints, MFR is preferably 50 to 400 g/10 minutes, more preferably 60 to 400 g/10 minutes, and still more preferably 70 to 300 g/10 minutes.

For the (A-1) polypropylene-based resin (propylene homopolymer), the MFR can be adjusted, for example, by controlling the hydrogen concentration during polymerization.

The MFR is a value measured in accordance with JIS K7210.

### (Content of (A-1) Polypropylene-based Resin)

Although the content of the (A-1) polypropylene-based resin in the stampable sheet of the present invention is not particularly limited, it is preferably 15 to 80% by mass. When the content of the polypropylene-based resin is less than 15% by mass, the molding workability may become insufficient, and molding of the stampable sheet may become difficult. On the other hand, when the content of the polypropylene-based resin exceeds 80% by mass, the contents of the flame retardant, the dispersant and the inorganic fiber become insufficient, and there is a possibility that sufficient flame shielding performance cannot be obtained. From the above viewpoints, the content of the polypropylene-based resin in the stampable sheet is more preferably 35 to 70% by mass, and even more preferably 40 to 60% by mass.

### <Modified Polyolefin-based Resin>

The stampable sheet of the present invention can further contain a modified polyolefin-based resin in addition to the polypropylene-based resin. Specific examples of the modified polyolefin-based resin include an acid-modified polyolefin-based resin and a hydroxy-modified polyolefin-based resin, and these may be used alone or in combination.

The types of the acid-modified polyolefin-based resin and the hydroxy-modified polyolefin-based resin used as the modified polyolefin-based resin are not particularly limited, and conventionally known ones may be used.

### (Acid-modified Polyolefin-based Resin)

Examples of the acid-modified polyolefin resin include one obtained by graftcopolymerizing a polyolefin, such as polyethylene, polypropylene, an ethylene-α-olefin copolymer, an ethylne-α-olefin-nonconjugated diene compound copolymer (EPDM etc.), and an ethylene-aromatic monovinyl compound-conjugated diene compound copolymer elastomer, with an unsaturated carboxylic acid such as maleic acid and maleic anhydride and then chemically modifying the resultant.

The graft copolymerization is carried out, for example, by reacting the polyolefin with an unsaturated carboxylic acid in an appropriate solvent using a radical generator such as benzoyl peroxide. The unsaturated carboxylic acid or a derivative component thereof can also be introduced into a polymer chain by random or block copolymerization with a polyolefin monomer.

Examples of the unsaturated carboxylic acid used for modification include a compound having a polymerizable double bond into which a carboxy group of a maleic acid, a fumaric acid, an itaconic acid, an acrylic acid, or a methacrylic acid and, when necessary, a functional group, such as a hydroxy group and an amino group, are introduced.

Derivatives of the unsaturated carboxylic acid include these acid anhydrides, esters, amides, imides and metal salts, and specific examples thereof include maleic anhydride, itaconic anhydride, methyl acrylate, ethyl acrylate. , butyl acrylate, and methyl methacrylate. Of these, maleic anhydride is preferred.

Preferred examples of acid-modified polyolefin-based resins include those modified by graft-polymerizing an olefin-based polymer having ethylene and/or propylene as a main polymer structural unit with maleic anhydride, and those modified by copolymerizing olefins mainly composed of ethylene and/or propylene with maleic anhydride. Specific examples include a combination of polyethylene/maleic anhydride-grafted ethylene-butene-1 copolymer, and a combination of polypropylene/maleic anhydride-grafted polypropylene.

### (Hydroxy-modified Polyolefin-based Resin)

A hydroxy-modified polyolefin-based resin is a modified polyolefin-based resin containing a hydroxy group. The hydroxy-modified polyolefin-based resin may have a hydroxy group at an appropriate site, for example, at an end of a main chain or at a side chain.

Examples of olefin-based resins constituting the hydroxy-modified polyolefin-based resins include homopolymers or copolymers of a-olefins such as ethylene, propylene, butene, 4-methylpentene-1, hexene, octene, nonene, decene, and dodecene; and copolymers of the aforementioned a-olefins and copolymerizable monomers.

Preferred examples of hydroxy-modified polyolefin-based resins include hydroxy-modified polyethylene-based resins, such as low-, medium- or high-density polyethylene, linear low-density polyethylene, ultra-high molecular weight polyethylene, ethylene-(meth)acrylic acid ester copolymer, and ethylene-vinyl acetate copolymer, polypropylene homopolymers of isotactic polypropylene and the like, random copolymers of propylene and α-olefin (for example, ethylene, butene, hexane, etc.), propylene-α-olefin block copolymers, and hydroxy-modified polypropylene-based resins such as hydroxy-modified poly(4-methylpentene-l).

### <(B) Flame Retardant>

The stampable sheet of the present invention contains (B) a flame retardant. The (B) flame retardant is not particularly limited, and examples thereof include a phosphorus-based flame retardant, a bromine-based flame retardant, and an antimony-based flame retardant. Of these, a phosphorus-based flame retardant is preferable from the viewpoint of improving flame shielding performance. Further, in the classification focused on the mechanism of action of the flame retardant, the (B) flame retardant is preferably an intumescent flame retardant from the viewpoint of improving the flame shielding performance.

### (Phosphorus-based Flame Retardant)

A phosphorus-based flame retardant is a phosphorus compound, that is, a compound containing a phosphorus atom in the molecule. A phosphorus-based flame retardant exhibits a flame retardant effect by forming char when a resin composition is burned.

The phosphorus-based flame retardant may be a known one, such as (poly)phosphate and (poly)phosphate ester. Here, "(poly)phosphate" indicates phosphate or polyphosphate, and "(poly)phosphate ester" indicates phosphate ester or polyphosphate ester.

The phosphorus-based flame retardant is preferably solid at 80°C.

A (poly)phosphate is preferable as the phosphorus-based flame retardant in terms of flame retardancy.

Examples of (poly)phosphate include ammonium polyphosphate, melamine polyphosphate, piperazine polyphosphate, piperazine orthophosphate, melamine pyrophosphate, piperazine pyrophosphate, melamine polyphosphate, melamine orthophosphate, calcium phosphate, and magnesium phosphate.

In addition, in the above examples, compounds in which melamine or piperazine is replaced with other nitrogen compounds can also be used. Examples of the other nitrogen compounds include N,N,N',N'-tetramethyldiaminomethane, ethylenediamine, N,N'-dimethylethylenediamine, N,N'-diethylethylenediamine, N,N-dimethylethylenediamine, N,N-diethylethylenediamine, N,N,N',N'-tetramethylethylenediamine, N,N,N',N'-diethylethylenediamine, 1,2-propanediamine, 1,3-propanediamine, tetramethylenediamine, pentamethylenediamine, hexamethylenediamine, 1,7-diaminoheptane, 1,8-diaminooctane, 1,9-diaminononane, 1,10-diaminodecane, trans-2,5-dimethylpiperazine, 1,4-bis(2-aminoethyl)piperazine, 1,4-bis(3-aminopropyl)piperazine, acetoguanamine, benzoguanamine, acrylguanamine, 2,4-diamino-6-nonyl-1,3,5-triazine, 2,4-diamino-6-hydroxy-1,3,5-triazine, 2-amino-4,6-dihydroxy-1,3,5-triazine, 2,4-diamino-6-methoxy-1,3,5-triazine, 2,4-diamino-6-ethoxy-1,3,5-triazine, 2,4-diamino-6-propoxy-l,3,5-triazine, 2,4-diamino-6-isopropoxy-1,3,5-triazine, 2,4-diamino-6-mercapto-1,3,5-triazine, 2-amino-4,6-dimercapto-1,3,5-triazine, ammeline, benzguanamine, acetoguanamine, phthalodiguanamine, melamine cyanurate, melamine pyrophosphate, butylene diguanamine, norbornene diguanamine, methylene diguanamine, ethylene dimelamine, trimethylene dimelamine, tetramethylene dimelamine, hexamethylene dimelamine, and 1,3-hexylene dimelamine. These (poly)phosphates may be used alone or in combination of two or more kinds thereof.

Of those mentioned above, the phosphorus-based flame retardant is preferably a salt of (poly)phosphoric acid and a nitrogen compound (hereinafter also referred to as "compound (B1)"). The compound (B1) is an intumescent flame retardant, and forms a surface expansion layer (intumescent) of foamed char when the resin composition is burned. By forming the surface expansion layer, diffusion of decomposition products and heat transfer are suppressed, and excellent flame retardancy is exhibited.

Examples of nitrogen compounds in the compound (B1) include ammonia, melamine, piperazine, and other nitrogen compounds described above.

Commercially available phosphorus-based flame retardants include ADEKA STAB FP-2100J, FP-2200, and FP-2500S (manufactured by ADEKA Corporation).

### (Bromine-based Flame Retardant)

Examples of the bromine-based flame retardant include decabromodiphenyl ether, tetrabromobisphenol A, tetrabromobisphenol S, 1,2-bis(2',3',4',5',6'-pentabromophenyl)ethane, 1,2-bis(2,4,6-tribromophenoxy)ethane, 2,4,6-tris(2,4,6-tribromophenoxy)-1,3,5-triazine, 2,6-dibromophenol, 2,4-dibromophenol, brominated polystyrene, ethylenebistetrabromophthalimide, hexabromocyclododecane, hexabromobenzene, pentabromobenzyl acrylate, 2,2-bis[4'(2",3"-dibromopropoxy)-3',5'-dibromophenyl]-propane, bis[3,5-dibromo-4-(2,3-dibromopropoxy)phenyl]sulfone, and tris(2,3-dibromopropyl)isocyanurate.

### (Antimony-based Flame Retardant)

Examples of the antimony-based flame retardant include antimony trioxide, antimony tetroxide, antimony pentoxide, sodium pyroantimonate, antimony trichloride, antimony trisulfide, antimony oxychloride, antimony dichloride perchloropentane and potassium antimonate, and antimony trioxide and antimony pentoxide are particularly preferred.

### (Intumescent Flame Retardant)

An intumescent flame retardant is a flame retardant that suppresses the combustion of materials by forming a surface expansion layer (intumescent) that prevents radiant heat from a combustion source and the diffusion of combustion gas and smoke from the combusted material to the outside. Examples of the intumescent flame retardant include a salt of (poly)phosphoric acid and a nitrogen compound. Specific examples include an ammonium salt and an amine salt of (poly)phosphoric acid such as ammonium polyphosphate, melamine polyphosphate, piperazine polyphosphate, ammonium pyrophosphate, melamine pyrophosphate and piperazine pyrophosphate.

Of the above flame retardants, a phosphorus-based flame retardant is preferable from the viewpoint of having no biopersistence and having excellent flame retardancy, and a non-halogen-based flame retardant is preferable from the environmental point of view. In addition, an intumescent flame retardant is preferred from the viewpoint of improving the flame shielding performance of the resulting stampable sheet.

The above flame retardants can be used alone or in combination of two or more kinds thereof.

### (Content of (B) Flame Retardant)

Although the content of the flame retardant in the stampable sheet of the present invention is not particularly limited, it is preferably in the range of 1 to 30% by mass. When the content is 1% by mass or more, the stampable sheet can be imparted with good flame retardancy, and good flame shielding performance can be obtained. On the other hand, when the content of the flame retardant is 30% by mass or less, the thermoplastic resin can be contained at a sufficient content ratio, so that the molding workability is further improved. From the above viewpoints, the content of the flame retardant in the stampable sheet is more preferably in the range of 1 to 25% by mass, and still more preferably in the range of 3 to 20% by mass.

### <(C) Dispersant>

The (C) dispersant is not particularly limited as long as it can disperse the (B) flame retardant in the (A) thermoplastic resin. However, a polymeric dispersant can be preferably used in terms of compatibility with the (A) thermoplastic resin. Preferably, a dispersant that can disperse the (B) flame retardant in the (A-1) polypropylene-based resin can be used. As the polymeric dispersant, a polymeric dispersant having a functional group is preferable. From the viewpoint of dispersion stability, a polymeric dispersant having a functional group, such as a carboxy group, a phosphoric acid group, a sulfonic acid group, a primary, secondary or tertiary amino group, a quaternary ammonium base, a group derived from nitrogen-containing heterocycles such as pyridine, pyrimidine, and pyrazine is preferred.

In the present invention, a polymeric dispersant having a carboxy group is preferred, and a copolymer of an α-olefin and an unsaturated carboxylic acid is particularly preferred when a phosphorus-based flame retardant suitable as a flame retardant is used. By using the dispersant, the dispersibility of the phosphorus-based flame retardant can be improved, and the content of the flame retardant can be reduced.

### (Copolymer of α-olefin and Unsaturated Carboxylic Acid)

In the "copolymer of an α-olefin and an unsaturated carboxylic acid" (hereinafter referred to as "copolymer (Cl)") according to the present invention, it is preferable that the proportion of the α-olefin unit in the total 100 mol% of the α-olefin unit and the unsaturated carboxylic acid unit is 20 mol% or more and 80 mol% or less.

In the copolymer (C1), the proportion of the α-olefin unit to the total amount of the α-olefin unit and the unsaturated carboxylic acid unit is more preferably 30 mol% or more, and more preferably 70 mol% or less. When the proportion of the α-olefin is equal to or more than the lower limit, the compatibility with the (A) polyolefin-based resin is more excellent, and when the proportion of the α-olefin is equal to or less than the upper limit, the compatibility with the (B) flame retardant is more excellent.

In the copolymer (Cl), the α-olefin is preferably an α-olefin having 5 or more carbon atoms, and more preferably an α-olefin having 10 or more and 80 or less carbon atoms. When the number of carbon atoms in the α-olefin is 5 or more, compatibility with the thermoplastic resin (A) tends to be better, and when the number of carbon atoms is 80 or less, it is advantageous in terms of raw material cost. From the above viewpoints, the number of carbon atoms in the α-olefin is further more preferably 12 or more and 70 or less, and particularly preferably 18 or more and 60 or less.

Examples of the unsaturated carboxylic acid in the copolymer (C1) include (meth)acrylic acid, maleic acid, methylmaleic acid, fumaric acid, methylfumaric acid, tetrahydrophthalic acid, itaconic acid, citraconic acid, crotonic acid, isocrotonic acid, glutaconic acid, norbomane-5-ene-2,3-dicarboxylic acid, and esters, anhydrides and imides of these unsaturated carboxylic acids. The "(meth)acrylic acid" indicates acrylic acid or methacrylic acid.

Specific examples of esters, anhydrides and imides of the unsaturated carboxylic acids include (meth)acrylic acid esters, such as methyl (meth)acrylate, ethyl (meth)acrylate, butyl (meth)acrylate, 2-ethylhexyl (meth)acrylate, and glycidyl methacrylate; dicarboxylic acid anhydrides, such as maleic anhydride, itaconic anhydride, citraconic anhydride, and 5-norbomene-2,3-dicarboxylic anhydride; and maleimide compounds, such as maleimide, N-ethylmaleimide, and N-phenylmaleimide. These may be used alone or in combination of two or more kinds thereof.

Among the above, esters and dicarboxylic acid anhydrides are preferable from the viewpoint of copolymerization reactivity. Of these, dicarboxylic acid anhydrides are preferred, and maleic anhydrides are particularly preferred, from the viewpoint of compatibility with a phosphorus-based flame retardant suitable as a flame retardant.

The weight average molecular weight of the copolymer (C1) is preferably 2,000 or more, more preferably 3,000 or more, and it is preferably 50,000 or less, more preferably 30,000 or less. When the weight average molecular weight of the copolymer (C1) is within the above range, the dispersibility of the (B) flame retardant will be more excellent.

The weight average molecular weight of the copolymer (C1) is a standard polystyreneequivalent value measured by gel permeation chromatography after dissolving the copolymer (C1) in tetrahydrofuran (THF).

Commercially available products of the copolymer (C1) include LOCOLUB CE2 (manufactured by Clariant Japan Co., Ltd.) and DIACARNA 30M (manufactured by Mitsubishi Chemical Corporation).

The content of the (C) dispersant with respect to 100 parts by mass of the (B) flame retardant in the present stampable sheet is more than 0 and 25 parts by mass or less, preferably in the range of 0.01 to 10 parts by mass.

According to the studies of the present inventors, the presence of the flame retardant uniformly dispersed in the inorganic fibers constituting the stampable sheet using a thermoplastic resin as a matrix resin can significantly improve the flame shielding performance of the stampable sheet. Although the detailed mechanism is unknown, the present inventors presume as follows. That is, when the flame retardant is uniformly dispersed in the resin between the inorganic fibers, the char formed by the flame retardant coming into contact with the flame is fixed in gaps between the inorganic fibers. Furthermore, the size of the char that expands and forms when contacting the flame is restricted by the gaps between the inorganic fibers, so that the size of the formed char becomes uniform. It is believed that the combination of the effect of fixing the char by the inorganic fibers and the uniformity of the size of the char results in the formation of a dense char, which significantly improves the flame shielding performance of the stampable sheet. Based on these findings, the present inventors have found that by setting the ratio of the content of the dispersant to the flame retardant within a specific range, the flame retardant can be controlled to be uniformly present in the resin between the inorganic fibers, and the flame shielding performance of the stampable sheet can be significantly improved.

For the above reasons, when the content of the (C) dispersant is 0, the dispersibility of the (B) flame retardant is insufficient, and the stampable sheet cannot be provided with sufficient flame shielding performance. On the other hand, when the content exceeds 25 parts by mass, the physical properties of the stampable sheet will be insufficient. From the same viewpoint, the content of the (C) dispersant is preferably 0.01 parts by mass or more, more preferably 0.1 parts by mass or more, still more preferably 1 part by mass or more, and particularly preferably 2 parts by mass or more. On the other hand, the upper limit is more preferably 20 parts by mass or less, further more preferably 15 parts by mass or less, even more preferably 10 parts by mass or less, still more preferably 5 parts by mass or less, and particularly preferably 3 parts by mass or less.

In addition, the proportion of the (C) dispersant to a total of 100 parts by mass of the (A) thermoplastic resin and the (B) flame retardant is preferably 0.01 parts by mass or more, more preferably 0.05 parts by mass or more, and still more preferably 0.1 parts by mass or more. On the other hand, it is preferably 10 parts by mass or less, more preferably 5.0 parts by mass or less, still more preferably 2.0 parts by mass or less, further more preferably 1.5 parts by mass or less, and still more preferably 1.0 parts by mass or less. When the proportion of the (C) dispersant is equal to or more than the above lower limit, the (B) flame retardant will be better dispersed, and the resulting stampable sheet will have better flame shielding performance and physical properties, and the resulting molded article will have better appearance. When the proportion of the (C) dispersant is equal to or less than the above upper limit, the influence of the (C) dispersant on the flame shielding performance of the stampable sheet can be further suppressed. In particular, the proportion of the (C) dispersant to a total of 100 parts by mass of the polyolefin-based resin and the (B) flame retardant is preferably 0.01 parts by mass or more, more preferably 0.05 parts by mass or more, and still more preferably 0.1 parts by mass or more. On the other hand, it is preferably 10 parts by mass or less, more preferably 5.0 parts by mass or less, still more preferably 2.0 parts by mass or less, further more preferably 1.5 parts by mass or less, and even more preferably 1.0 parts by mass or less.

In addition, for the (D) inorganic fibers described in detail below, the proportion of the (C) dispersant to 100 parts by mass of the (D) inorganic fibers is preferably 0.01 parts by mass or more, more preferably 0.05 parts by mass or more, and still more preferably 0.1 parts by mass or more. On the other hand, it is preferably 10 parts by mass or less, more preferably 5.0 parts by mass or less, and even more preferably 2.0 parts by mass or less. When the proportion of the (C) dispersant is equal to or more than the above lower limit, the resulting stampable sheet will have better flame shielding performance and physical properties, and the resulting molded article will have better appearance. When the proportion of the (C) dispersant is equal to or less than the above upper limit, the influence of the (C) dispersant on the flame shielding performance of the stampable sheet can be further suppressed.

### <(D) Inorganic Fiber>

The stampable sheet of the present invention contains (D) an inorganic fiber. As the (D) inorganic fiber, various fibers can be used, for example, glass fiber, rock wool, metal oxide fiber such as alumina fiber and silica alumina fiber, potassium titanate fiber, calcium silicate (wollastonite ) fiber, ceramic textiles such as ceramic fiber, carbon fiber, and metal fiber. These inorganic fibers may be used alone or in combination of two or more kinds thereof.

Among the above inorganic fibers, at least one selected from glass fiber and alumina fiber is preferable from the viewpoint of flame shielding performance and workability.

The (D) inorganic fiber may include two or more inorganic fibers having different melting temperatures. As a combination of two or more inorganic fibers having different melting temperatures, at least one is glass fiber, and the other one or more is preferably a combination of one or more inorganic fibers selected from the group consisting of alumina fiber, silica fiber, alkaline earth silicate fiber (biosoluble), and carbon fiber. By including two or more kinds of inorganic fibers having different melting temperatures, it is possible to effectively prevent deterioration of the flame shielding performance.

In addition, the inorganic fibers used in the present invention may be used in combination with a sizing agent or a surface treatment agent. Examples of such a sizing agent or surface treatment agent include a compound having a functional group, such as an epoxy compound, a silane compound, and a titanate compound.

The average fiber diameter of the inorganic fibers is preferably 3 to 25 µm. The average fiber length is preferably 0.1 mm or more, more preferably 1 mm or more, and even more preferably 5 mm or more.

Regarding the average fiber diameter and the average fiber length, since the preferred ranges differ depending on the type of inorganic material that constitutes the inorganic fibers, specific preferred ranges will be described later.

In addition, the fiber diameter can be measured using a scanning electron microscope or the like, and the average fiber diameter can be obtained, for example, by randomly measuring the fiber diameters of 10 fibers and calculating the average value. In addition, the fiber length can be measured using a ruler, vernier caliper, or the like from an image magnified with a microscope or the like, when necessary. The average fiber length can be obtained, for example, by randomly measuring the fiber lengths of 10 fibers and calculating the average value.

The content of inorganic fibers in the stampable sheet of the present invention is 1 to 80% by mass. When the content of the inorganic fiber is less than 1% by mass, the strength, rigidity, and impact resistance of the stampable sheet may decrease. On the other hand, when the content of the inorganic fibers exceeds 80% by mass, it may become extremely difficult to produce and process the stampable sheet. Further, when the content of the inorganic fibers exceeds 80% by mass, the specific gravity of the stampable sheet is increased, so that the effect of weight reduction as a metal substitute is reduced, which is not preferable.

From the above viewpoints, the content of the (D) inorganic fiber in the stampable sheet is more preferably 3 to 60% by mass, further preferably 10 to 50% by mass, and particularly 30 to 45% by mass.

### (Glass Fiber)

One example of the (D) inorganic fiber suitable for the stampable sheet of the present invention is glass fiber. The glass fiber may be, for example, a long fiber with an average fiber length of 30 mm or more, or a fiber with a short average fiber length (chopped strand). However, from the viewpoint of flame shielding performance, rigidity, impact resistance and the like, it is preferable to use glass fibers having a long average fiber length.

More specifically, the average fiber length is preferably 5 mm or more. When the average fiber length is 5 mm or more, the stampable sheet has good strength and impact resistance. From the above viewpoints, the average fiber length of the glass fibers is preferably 5 mm or more, and more preferably 30 mm or more.

The upper limit of the average fiber length of the glass fiber is not particularly limited. For example, when using pellets produced by a pultrusion method using glass fibers, the length of the pellets is the fiber length of the glass fibers, and thus the maximum length is about 20 mm. In addition, in a swirl mat system using long glass fibers, the length of the glass fibers in roving used for production is the maximum fiber length, and thus it is about 17,000 m (17 km). However, when it is cut according to the size of the stampable sheet, the cut length becomes the maximum fiber length.

Also, the average fiber diameter of the glass fibers is preferably in the range of 9 to 25 µm. When the average fiber diameter is 9 µm or more, the stampable sheet has sufficient rigidity and impact resistance. On the other hand, when the average fiber diameter is 25 µm or less, the stampable sheet has good strength. From the above viewpoints, it is more preferable that the average fiber diameter of the glass fibers is in the range of 10 to 15 µm.

The average fiber diameter and average fiber length of the glass fibers can be measured by the above methods.

The material of the glass fibers used in the present invention is not particularly limited, and may be any of non-alkali glass, low-alkali glass, and alkali-containing glass. Also, glass fibers having various compositions that have been used conventionally can be used.

### (Alumina Fiber)

One example of the (D) inorganic fiber suitable for the stampable sheet of the present invention is alumina fiber. An alumina fiber is usually a fiber made of alumina and silica, and in the stampable sheet of the present invention, the alumina/silica composition ratio (mass ratio) of the alumina fibers is preferably in a range called a mullite composition, or a high alumina composition, of 65/35 to 98/2, more preferably in the range of 70/30 to 95/5, and particularly preferably in the range of 70/30 to 74/26.

The average fiber diameter of the alumina fiber is preferably in the range of 3 to 25 µm, and is preferably substantially free of fibers with a fiber diameter of 3 µm or less. Here, substantially free of fibers with a fiber diameter of 3 µm or less means that fibers with a fiber diameter of 3 µm or less account for 0.1% by mass or less of the total mass of inorganic fibers.

Further, the average fiber diameter of the alumina fibers is more preferably 5 to 8 µm. When the average fiber diameter of the inorganic fibers is too large, the repulsive force and toughness of a mat-like inorganic fiber aggregate layer will decrease. On the other hand, when the average fiber diameter is too small, the amount of dust floating in the air increases, and the probability of containing inorganic fibers with a fiber diameter of 3 µm or less increases.

The alumina fiber is a fiber having an average fiber length of preferably 5 mm or more, more preferably 30 mm or more, and even more preferably 50 mm or more. Also, the fiber is preferably 3.0 × 103 mm or less, and more preferably 1.0 × 103 mm or less. When the average fiber length and average fiber diameter of the alumina fibers are within the range, the strength and impact resistance of the stampable sheet will be good.

### (Carbon Fiber)

The carbon fiber has the same suitable range as the glass fiber.

### <Optional Additive Component>

In the stampable sheet of the present invention, in addition to the above components, any additive component can be blended for a purpose of imparting other effects, such as further improving the effects of the present invention, within a range that does not significantly impair the effects of the present invention.

Specific examples thereof include a colorant such as a pigment, a light stabilizer such as a hindered amine-based light stabilizer, a UV absorber such as a benzotriazole-based UV absorber, a nucleating agent such as a sorbitol-based nucleating agent, an antioxidant such as a phenol-based and a phosphorus-based antioxidant, an antistatic agent such as a nonionic surfactant, a neutralizing agent such as an inorganic compound, an antibacterial and antifungal agent such as a thiazole-based antibacterial and antifungal agent, a flame retardant and auxiliary flame retardant such as a halogen compound and lignophenol, a plasticizer, a dispersant such as an organic metal salt-based dispersant, a lubricant such as a fatty acid amide-based lubricant, a metal deactivator such as a nitrogen compound, a polyolefin resin other than the aforementioned polypropylene-based resin, a thermoplastic resin such as a polyamide resin and a polyester resin, and an elastomer such as an olefin-based elastomer and a styrene-based elastomer (rubber component).

These optional additive components may be used in combination of two or more kinds thereof.

As the colorant, for example, an inorganic or organic pigment and the like are effective in imparting and improving colored appearance, attractiveness, texture, commercial value, weather resistance, durability, etc. of the polypropylene-based resin composition and a molded article thereof.

Specific examples of the inorganic pigment include carbon black, such as furnace carbon and ketjen carbon; titanium oxide; iron oxide (red iron oxide, etc.); chromic acid (chrome, etc.); molybdic acid; selenide sulfide; and ferrocyanide. Specific examples of the organic pigment include a sparingly soluble azo lake, a soluble azo lake, an insoluble azo chelate; a condensable azo chelate; an azo pigment such as other azo chelates; a phthalocyanine pigment, such as phthalocyanine blue and phthalocyanine green; a threne-based pigment, such as anthraquinone, perinone, perylene, and thioindigo; a dye lake; a quinacridone-based pigment; a dioxazine-based pigment; and an isoindolinone-based pigment. In addition, an aluminum flake or a pearl pigment can be contained to give a metallic tone or a pearly tone. A dye can also be contained.

A hindered amine compound, a benzotriazole-based, benzophenone-based, or salicylate-based light stabilizer and or UV absorber is effective in imparting and improving the weather resistance and durability of the polypropylene-based resin composition and a molded article thereof, and is effective in further improving weather-resistance discoloration properties.

Specific examples of the hindered amine compound include a condensation product of dimethyl succinate and 1-(2-hydroxyethyl)-4-hydroxy-2,2,6,6-tetramethylpiperidine; poly[[6-(1,1,3,3-tetramethylbutyl)imino-1,3,5-triazine-2,4-diyl][(2,2,6,6-tetramethyl-4-piperidyl)imino]hexamethylene[(2,2,6,6-tetramethyl-4-piperidyl)imino]]; tetrakis(2,2,6,6-tetramethyl-4-piperidyl)1,2,3,4-butanetetracarboxylate; tetrakis( 1,2,2,6,6-pentamethyl-4-piperidyl)1,2,3,4-butane tetracarboxylate; bis(1,2,2,6,6-pentamethyl-4-piperidyl)sebacate; and bis-2,2,6,6-tetramethyl-4-piperidyl sebacate. Examples of a benzotriazole-based one include 2-(2'-hydroxy-3',5'-di-t-butylphenyl)-5-chlorobenzotriazole; and 2-(2'-hydroxy-3'-t-butyl-5'-methylphenyl)-5-chlorobenzotriazole. Examples of a benzophenone-based one include 2-hydroxy-4-methoxy benzophenone; and 2-hydroxy-4-n-octoxybenzophenone. Examples of a salicylate-based one include 4-t-butylphenyl salicylate; and 2,4-di-t-butylphenyl 3',5'-di-t-butyl-4'-hydroxybenzoate.

Here, a method of using the light stabilizer and the UV absorber in combination is preferable because it has a large effect of improving weather resistance, durability, weather-resistance discoloration properties, and the like.

As an antioxidant, for example, a phenol-based, phosphorus-based or sulfur-based antioxidant is effective in imparting and improving heat resistance, processing stability, heat aging resistance, and the like of the polypropylene-based resin composition and a molded article thereof.

Also, as an antistatic agent, for example, a nonionic or cationic antistatic agent is effective in imparting and improving the antistatic property of the polypropylene-based resin composition and a molded article thereof.

Examples of the olefin-based elastomer include an ethylene/α-olefin copolymer elastomer, such as an ethylene/propylene copolymer elastomer (EPR), an ethylene/butene copolymer elastomer (EBR), an ethylene/hexene copolymer elastomer (EHR), and an ethylene/octene copolymer elastomer (EOR); an ethylene/α-olefin/diene terpolymer elastomer, such as an ethylene/propylene/ethylidene norbornene copolymer, an ethylene/propylene/butadiene copolymer, and an ethylene/propylene/isoprene copolymer, and a styrene/butadiene/styrene triblock copolymer elastomer (SBS).

Examples of the styrene-based elastomer include a styrene-based elastomer, such as a styrene/isoprene/styrene triblock copolymer elastomer (SIS), a styrene-ethylene/butylene copolymer elastomer (SEB), a styrene-ethylene/propylene copolymer elastomer (SEP), a styrene-ethylene/butylene-styrene copolymer elastomer (SEBS), a styrene-ethylene/butylene-ethylene copolymer elastomer (SEBC), a hydrogenated styrene/butadiene elastomer (HSBR), a styrene-ethylene/propylene-styrene copolymer elastomer (SEPS), a styrene-ethylene/ethylene/propylene-styrene copolymer elastomer (SEEPS), a styrenebutadiene/butylene-styrene copolymer elastomer (SBBS), a partially hydrogenated styreneisoprene-styrene copolymer elastomer, and a partially hydrogenated styreneisoprene/butadiene-styrene copolymer elastomer, and further a hydrogenated polymer-based elastomer, such as an ethylene-ethylene/butylene-ethylene copolymer elastomer (CEBC).

Of these, it is preferable that an ethylene/octene copolymer elastomer (EOR) and/or an ethylene/butene copolymer elastomer (EBR) is used from the viewpoint that the polypropylene-based resin composition of the present invention and a molded article thereof tend to be easily imparted with appropriate flexibility and have excellent impact resistance.

### <Thermoplastic Resin Compositions

The thermoplastic resin composition according to the present invention is a resin composition for producing the stampable sheet of the present invention, containing (A) a thermoplastic resin, a modified polyolefin-based resin added as necessary, and (B) a flame retardant and (C) a dispersant. Further, optional additive components may be blended. In the above thermoplastic resin composition, when (A) the thermoplastic resin is (A-1) a polypropylene-based resin, it is particularly sometimes referred to as a polypropylene-based resin composition (hereinafter sometimes referred to as "PP composition"). The PP resin composition is a resin composition for producing the stampable sheet of the present invention, containing (A-1) a polypropylene-based resin, a modified polyolefin-based resin added as necessary, (B) a flame retardant, and (C) a dispersant. Further, optional additive components may be blended.

As a method for producing the thermoplastic resin composition or the PP composition, a conventionally known method can be used, and the composition can be produced by blending, mixing, and melt-kneading the above components.

Mixing is performed using a mixer such as a tumbler, a V blender, and a ribbon blender. Melt kneading is performed by melt-kneading and granulating using equipment such as a single screw extruder, a twin screw extruder, a Banbury mixer, a roll mixer, a Brabender plastograph, and a kneader.

### <Production Method of Stampable Sheet>

The production method of the stampable sheet of the present invention is not particularly limited. However, it is preferable to produce by impregnating (D) a mat made of inorganic fibers (hereinafter sometimes referred to as "inorganic fiber mat") with the thermoplastic resin composition or PP composition. Examples of impregnation methods include a method of applying a thermoplastic composition or a PP composition to an inorganic fiber mat, and a method of preparing a sheet of a thermoplastic resin composition or a PP composition (hereinafter sometimes referred to as "thermoplastic resin sheet" or "PP sheet"), laminating the thermoplastic resin sheet or PP sheet on an inorganic fiber mat, and heating and melting to impregnate the sheet.

In the present invention, a method of laminating a thermoplastic resin sheet or a PP sheet on an inorganic fiber mat and heating and melting is preferred from the viewpoint of impregnating the fibers with the resin of the stampable sheet. In particular, it can be obtained by laminating an inorganic fiber mat between two thermoplastic resin sheets or PP sheets, then heating and pressurizing the laminate, and then cooling and solidifying the laminate.

Here, the thickness of the thermoplastic resin sheet or PP sheet is not particularly limited as long as the fiber mat can be impregnated well.

### (Inorganic Fiber Mat)

The form of the inorganic fibers used in the stampable sheet production method is not particularly limited, and various forms can be used. However, those in the form of a mat or sheet are preferred.

More specifically, a mat formed of glass fibers (hereinafter referred to as "glass fiber mat"), or a mat formed of metal oxide fibers typified by alumina fibers (hereinafter referred to as "metal oxide mat") is preferred.

The basis weight (mass per unit area) of the inorganic fiber mat is not particularly limited and is appropriately determined according to the application. However, it is preferably 300 g/m² or more, more preferably greater than 800 g/m², and still more preferably greater than 1500 g/m². Moreover, the basis weight of the inorganic fiber mat is not particularly limited; however, it is preferably 5000 g/m² or less, more preferably 4500 g/m² or less, still more preferably 4000 g/m² or less, and particularly preferably 3500 g/m² or less.

The basis weight (weight per area) per unit area of the inorganic fiber mat can be set within the above range by adjusting the amount of fiber per unit area when inorganic fiber aggregates constituting the inorganic fiber mat are laminated using a folding device. In addition, the inorganic fiber mat of the present invention may have a structure in which a plurality of inorganic fiber mats are bonded together or a single structure. However, a single structure is preferred from the viewpoint of handling properties and peel strength at a bonding interface.

### (Glass Fiber Mat)

Examples of the form of the glass fiber mat used in the present invention include felt and blanket processed with short glass fiber cotton, a chopped strand mat obtained by processing continuous glass fiber, a swirl (spiral) mat of continuous glass fiber, and a unidirectional aligned mat. Of these, a glass fiber mat obtained by needle-punching a swirl (spiral) mat of continuous glass fiber is particularly preferable because the strength and impact resistance of the stampable sheet are excellent.

### (Metal Oxide Fiber Mat)

The metal oxide fiber mat according to the present invention is a mat that is composed of metal oxide fibers such as alumina fibers and that has undergone a needling treatment.

In a method of laminating a thermoplastic resin sheet or PP sheet on an inorganic fiber mat and heating and melting, the heating temperature is preferably 170 to 300°C. When the heating temperature is 170°C or higher, the polypropylene-based resin has sufficient fluidity, the inorganic fiber mat can be sufficiently impregnated with the PP composition, and a suitable stampable sheet can be obtained. On the other hand, when the heating temperature is 300°C or less, the thermoplastic resin composition or PP composition will not deteriorate.

Furthermore, the applied pressure is preferably 0.1 to 1 MPa. When the applied pressure is 0.1 MPa or more, the inorganic fiber mat can be sufficiently impregnated with the thermoplastic resin composition or the PP composition, and a suitable stampable sheet can be obtained. On the other hand, when the pressure is 1 MPa or less, the thermoplastic resin composition or PP composition will flow and burrs will not occur.

In addition, the cooling temperature is not particularly limited as long as it is equal to or lower than the freezing point of the thermoplastic resin composition or the thermoplastic resin in the PP composition. However, when the cooling temperature is 80°C or lower, the obtained stampable sheet is not deformed when taken out. From the above point of view, the cooling temperature is preferably room temperature to 80°C.

Methods for obtaining a stampable sheet by heating, pressurizing, and cooling the laminate include a method of press-molding the laminate in a mold equipped with a heating device, and a lamination processing of passing the laminate between two pairs of rollers equipped with a heating device to heat and pressurize the laminate. In particular, lamination processing is preferable because it allows continuous production, resulting in good productivity.

### <Thickness of Stampable Sheet>

The thickness of the stampable sheet of the present invention is usually 1 to 10 mm, preferably 2 to 5 mm. When the thickness of the stampable sheet is 1 mm or more, it is easy to produce the stampable sheet. On the other hand, when the thickness of the stampable sheet is 10 mm or less, in the case where the stampable sheet is processed by stamping molding or the like, it is unnecessary to preheat for a long time, and good moldability can be obtained.

### <Molded Article>

The stampable sheet of the present invention can be molded into a desired shape by stamping molding according to a conventional method to obtain a molded article made of the stampable sheet.

### (Application)

Applications of the stampable sheet of the present invention include, for example, various industrial parts such as automobile parts, and electrical and electronic equipment parts. In particular, it is excellent in strength, rigidity, conductivity, and workability, and thus it is suitable for applications that require a high degree of balance of these performances, for example, various housings and cases such as battery cases.

### [Battery Housing]

The second aspect of the present invention relates to a battery housing.

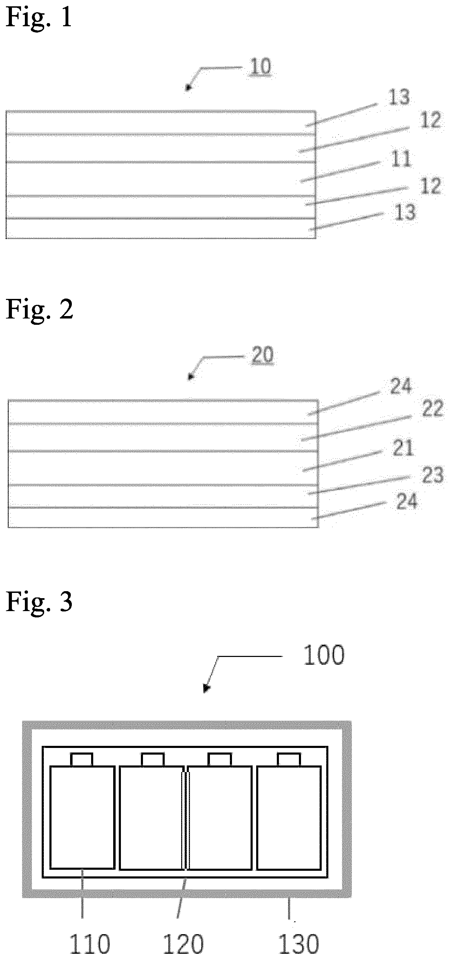

Fig. 3 is a conceptual view showing a structure such as a battery including a battery housing. A structure 100 such as a battery includes, for example, a battery module 110 that is an assembly of battery cells (battery units), a battery pack 120 that is an assembly of battery modules, and a battery housing 130 for housing battery members such as a battery pack.

The battery housing of the present invention is made of a fiber-reinforced resin, and the fiber-reinforced resin contains a flame retardant and a dispersant, and contains at least an inorganic fiber as the fiber. In a preferred embodiment, the battery housing is made of a fiber-reinforced resin and contains at least an inorganic fiber having a melting temperature of higher than 1000°C as the fiber.

### <Fiber>

The fiber in the fiber-reinforced resin according to the present invention may be an organic fiber or an inorganic fiber. However, an inorganic fiber is preferable from the viewpoint of heat resistance, and examples thereof include glass fiber, rock wool, basalt fiber, alumina fiber, silica alumina fiber, potassium titanate fiber, calcium silicate (wollastonite) fiber, alkaline earth silicate fiber (biosoluble), silica fiber, and carbon fiber. These inorganic fibers may be used alone or in combination of two or more kinds thereof.

In the present invention, the fiber may include an inorganic fiber with a melting temperature of over 1000°C or an inorganic fiber with a burn-out temperature of over 1000°C (hereinafter sometimes referred to as "highly heat-resistant fiber"). Examples of the highly heat-resistant fiber include alumina fiber, potassium titanate fiber, silica alumina fiber, alkaline earth silicate fiber (biosoluble), basalt fiber, and silica fiber. Of these, in particular, one or more highly heat-resistant fibers selected from the group consisting of alumina fiber, silica fiber and alkali earth silicate fiber (biosoluble) are preferred. The melting temperature is preferably a melting temperature in an air atmosphere.

The highly heat-resistant fiber can be used alone or in combination of two or more kinds thereof.

In addition, the fiber preferably contain two or more inorganic fibers with different melting temperatures. At least one of these inorganic fibers is preferably the above-described highly heat-resistant fiber, and the other one or more may be a highly heat-resistant fiber, an inorganic fiber having a melting temperature of 1000°C or lower, or an inorganic fiber or an organic fiber having a burn-out temperature of 1000°C or lower. By including two or more types of fibers having different melting temperatures, it is possible to prevent the highly heat-resistant fibers from breaking and to prevent deterioration of functions of the highly heat-resistant fibers.

As for the combination of two or more kinds of inorganic fibers having different melting temperatures, at least one is glass fiber, and the other one or more is preferably a combination of one or more inorganic fibers selected from the group consisting of alumina fiber, silica fiber, alkaline earth silicate fiber (biosoluble), and carbon fiber. By containing two or more kinds of inorganic fibers having different melting temperatures, it is possible to effectively prevent deterioration of the flame shielding function.

When the battery housing contains a highly heat-resistant fiber, the content of the highly heat-resistant fiber is preferably 1 part by mass or more, more preferably 3 parts by mass or more, and still more preferably 5 parts by mass or more, with respect to 100 parts by mass of the fiber-reinforced resin. The upper limit is preferably 20 parts by mass or less, more preferably 15 parts by mass or less, and even more preferably 10 parts by mass or less. When the content is equal to or more than the above lower limit, sufficient flame shielding performance and rigidity can be obtained, and when the content is equal to or lower than the above upper limit, workability is ensured.

The fiber of the present invention can include a highly heat-resistant fiber as described above, and may include fibers other than the highly heat-resistant fiber. For example, it may be a fiber having a melting temperature of 1 000°C or lower, or it may be an inorganic fiber, an organic fiber, or a carbon fiber.

By mixing other fibers with high heat-resistant fibers, it is possible to prevent the highly heat-resistant fiber from breaking and prevent the deterioration of functions of the highly heat-resistant fiber. From the above viewpoints, glass fibers are suitable as other fibers, and the fiber in the present invention preferably includes highly heat-resistant fiber and glass fiber, and particularly preferably includes glass fiber and one or more selected from the group consisting of alumina fiber, alkaline earth silicate fiber (biosoluble), and silica fiber.

When a highly heat-resistant fiber (for example, alumina fiber, alkaline earth silicate fiber (biosoluble), and silica fiber) and a fiber other than the highly heat-resistant fiber (for example, glass fiber) are contained, the mass ratio to the highly heat-resistant fiber (fiber other than the highly heat-resistant fiber/highly heat-resistant fiber) is preferably in the range of 0.5 to 10, and more preferably in the range of 1 to 8.

In addition, the highly heat-resistant fiber, particularly one or more selected from the group consisting of alumina fiber, alkaline earth silicate fiber (biosoluble) and silica fiber, and glass fiber may be contained in the fiber-reinforced resin, or a mat of the highly heat-resistant fiber and a mat of glass fiber, which will be described in detail later, may be laminated and impregnated with a resin to obtain a sheet-shaped product.

The fiber used in the present invention may be used in combination with a sizing agent or a surface treatment agent. Examples of such a sizing agent or surface treatment agent include a compound having a functional group, such as an epoxy compound, a silane compound, and a titanate compound.

In the fibers of the present invention, at least one kind of fibers preferably has an average fiber diameter of 3 to 25 µm. Moreover, the average fiber length of at least one kind of fibers is preferably 0.1 mm or more, more preferably 1 mm or more, and even more preferably 5 mm or more.

When the fiber of the present invention includes a highly heat-resistant fiber and other fibers, the average fiber diameter of at least one kind of fibers is preferably 3 to 25 µm, and the average fiber length thereof is preferably 5 mm or more.

As for the average fiber diameter and the average fiber length, since the preferred ranges differ depending on the type of material that constitutes the fibers, specific preferred ranges will be described later.

In addition, the fiber diameter can be measured using an optical microscope or the like, and the average fiber diameter can be obtained, for example, by randomly measuring the fiber diameters of 10 fibers and calculating the average value. In addition, the fiber length can be measured using a ruler, vernier caliper, or the like from an image magnified with a microscope or the like, when necessary. The average fiber length can be obtained, for example, by randomly measuring the fiber lengths of 10 fibers and calculating the average value.

The fiber content in the fiber-reinforced resin of the present invention is preferably 3 to 60% by mass. When the fiber content is 3% by mass or more, the strength, rigidity, and impact resistance of the battery housing can be ensured. On the other hand, when the fiber content is 60% by mass or less, the battery housing can be easily produced and processed. Further, when the fiber content is 60% by mass or less, the specific gravity decreases, and there is an advantage that the effect of weight reduction as a metal substitute is large.

From the above viewpoints, the fiber content in the fiber-reinforced resin is more preferably 10 to 50% by mass, and further preferably 30 to 45% by mass.

### <Thermoplastic Resin>

Although the resin constituting the fiber-reinforced resin of the present invention is not particularly limited, it can be a thermoplastic resin. The thermoplastic resin is not particularly limited, and examples thereof include polyolefin resins such as polyethylene and polypropylene, polyvinyl chloride, polystyrene, polyvinyl acetate, and polyurethane. In addition, these may be used with one kind alone, and may also be used of two or more kinds thereof. For example, the thermoplastic resin that constitutes the fiber-reinforced resin may be a composite resin of two or more of the aforementioned thermoplastic resins.

Of these, a polyolefin resin is preferred, and a polypropylene-based resin is particularly preferred, in terms of physical properties, versatility, cost, etc. of the resin.

The present invention is particularly useful when at least a polyolefin resin is included as the thermoplastic resin (A). In the present invention, a "polyolefin resin" means a resin in which the proportion of an olefin unit or a cycloolefin unit is 90 mol% or more with respect to 100 mol% of all structural units constituting the resin.

The proportion of the olefin unit or the cycloolefin unit to 100 mol% of all structural units constituting the polyolefin resin is preferably 95 mol% or more, and particularly preferably 98 mol% or more.

Examples of the polyolefin resin include an α-olefin polymer, such as polyethylene, polypropylene, polybutene, poly(3-methyl-1-butene), poly(3-methyl-1-pentene), and poly(4-methyl-1-pentene); an α-olefin copolymer, such as an ethylene-propylene block or random copolymer, an α-olefin-propylene block or random copolymer having 4 or more carbon atoms, an ethylene-methyl methacrylate copolymer, and an ethylene-vinyl acetate copolymer; and a cycloolefin polymer, such as polycyclohexene and polycyclopentene. Examples of the polyethylene include low-density polyethylene, linear low-density polyethylene, and high-density polyethylene. Examples of the polypropylene include isotactic polypropylene, syndiotactic polypropylene, hemiisotactic polypropylene, and stereoblock polypropylene. In the α-olefin-propylene block or random copolymer having 4 or more carbon atoms, examples of the α-olefin having 4 or more carbon atoms include butene, 3-methyl-1-butene, 3-methyl-1-pentene, and 4-methyl-1-pentene. These polyolefin resins may be used alone or in combination of two or more kinds thereof.

### (Polypropylene-based Resin)

Examples of the polypropylene-based resin include a propylene homopolymer and a propylene-α-olefin copolymer. Here, the propylene-α-olefin copolymer may be either a random copolymer or a block copolymer.

### (α-olefin)

Examples of α-olefins constituting the copolymer include ethylene, 1-butene, 2-methyl-1-propene, 1-pentene, 2-methyl-1-butene, 3-methyl-1-butene, 1 -hexene, 2-ethyl-1-butene, 2,3-dimethyl-1-butene, 2-methyl-1-pentene, 3-methyl-1-pentene, 4-methyl-1-pentene, 3,3-dimethyl-1-butene, 1-heptene, methyl-1-hexene, dimethyl-1-pentene, ethyl-1-pentene, trimethyl-1-butene, and 1-octene. These may be used alone for copolymerization with propylene, or two or more thereof may be used for copolymerization with propylene. Of these, from the viewpoint of improving the impact resistance strength of the stampable sheet, ethylene or 1-butene is preferable because the effect thereof is large, and ethylene is most preferable.

### (Propylene-ethylene Random Copolymer)

In the case of a random copolymer of propylene and ethylene, it preferably contains a propylene unit in an amount of 90 to 99.5% by mass of more, preferably 92 to 99% by mass, and preferably contains an ethylene unit in an amount of 0.5 to 10% by mass, more preferably 1 to 8% by mass. When the ethylene unit is equal to or more than the lower limit, the stampable sheet will have sufficient impact resistance strength, and when the ethylene unit is equal to or less than the upper limit, sufficient rigidity will be maintained.

The content of the propylene unit and the ethylene unit in the random copolymer of propylene and ethylene can be adjusted by controlling a composition ratio of propylene and ethylene during polymerization of the random copolymer of propylene and ethylene.

Further, the propylene content of the random copolymer of propylene and ethylene is a value measured using a cross fractionator, FT-IR, etc., and for the measurement conditions and the like, a method described in, for example, JP 2008-1 89893 A may be used.

### (Melt Flow Rate (MFR))

The overall melt flow rate (hereinafter sometimes abbreviated as MFR) (230°C, 2.16 kg load) of the thermoplastic resin used in the present invention is preferably 40 to 500 g/10 minutes. In the case where the MFR is 40 g/10 minutes or more, workability in producing the battery housing is not lowered. In addition, when the MFR is 500 g/10 minutes or less, burrs are not generated in the production of the battery housing. From the above viewpoints, MFR is preferably 50 to 400 g/10 minutes, more preferably 60 to 400 g/10 minutes, and still more preferably 70 to 300 g/10 minutes.

For the thermoplastic resin, the MFR can be adjusted, for example, by controlling the hydrogen concentration during polymerization.

The MFR is a value measured in accordance with JIS K7210.

### <<Content of Thermoplastic Resin>>

The content of the thermoplastic resin in the battery housing of the present invention is preferably 20 to 80% by mass. When the content of the thermoplastic resin is 20% by mass or more, the molding workability is sufficient, and the molding of the battery housing becomes easy. On the other hand, when the content of the thermoplastic resin is 80% by mass or less, the contents of the flame retardant, the dispersant and the inorganic fiber become sufficient, and sufficient flame shielding performance can be obtained. From the above viewpoints, the content of the thermoplastic resin in the battery housing is preferably 35 to 70% by mass, and more preferably 40 to 60% by mass.

### <Flame Retardant>

The battery housing of the present invention preferably contains a flame retardant. The flame retardant is not particularly limited, and examples thereof include a phosphorus-based flame retardant, a bromine-based flame retardant, and an antimony-based flame retardant. Of these, a phosphorus-based flame retardant is preferable from the viewpoint of improving flame shielding performance. Further, in the classification focused on the mechanism of action of the flame retardant, the (B) flame retardant is preferably an intumescent flame retardant from the viewpoint of improving the flame shielding performance.

### (Phosphorus-based Flame Retardant)

A phosphorus-based flame retardant is a phosphorus compound, that is, a compound containing a phosphorus atom in the molecule. A phosphorus-based flame retardant exhibits a flame retardant effect by forming char when a resin composition is burned.

The phosphorus-based flame retardant may be a known one, such as (poly)phosphate and (poly)phosphate ester. Here, "(poly)phosphate" indicates phosphate or polyphosphate, and "(poly)phosphate ester" indicates phosphate ester or polyphosphate ester.

The phosphorus-based flame retardant is preferably solid at 80°C.

A (poly)phosphate is preferable as the phosphorus-based flame retardant in terms of flame retardancy.

Examples of (poly)phosphate include ammonium polyphosphate, melamine polyphosphate, piperazine polyphosphate, piperazine orthophosphate, melamine pyrophosphate, piperazine pyrophosphate, melamine polyphosphate, melamine orthophosphate, calcium phosphate, and magnesium phosphate.

In addition, in the above examples, compounds in which melamine or piperazine is replaced with other nitrogen compounds can also be used. Examples of the other nitrogen compounds include N,N,N',N'-tetramethyldiaminomethane, ethylenediamine, N,N'-dimethylethylenediamine, N,N'-diethylethylenediamine, N,N-dimethylethylenediamine, N,N-diethylethylenediamine, N,N,N',N'-tetramethylethylenediamine, N,N,N',N'-diethylethylenediamine, 1,2-propanediamine, 1,3-propanediamine, tetramethylenediamine, pentamethylenediamine, hexamethylenediamine, 1,7-diaminoheptane, 1,8-diaminooctane, 1,9-diaminononane, 1,10-diaminodecane, trans-2,5-dimethylpiperazine, 1,4-bis(2-aminoethyl)piperazine, 1,4-bis(3-aminopropyl)piperazine, acetoguanamine, benzoguanamine, acrylguanamine, 2,4-diamino-6-nonyl-1,3,5-triazine, 2,4-diamino-6-hydroxy-1,3,5-triazine, 2-amino-4,6-dihydroxy-1,3,5-triazine, 2,4-diamino-6-methoxy-1,3,5-triazine, 2,4-diamino-6-ethoxy-1,3,5-triazine, 2,4-diamino-6-propoxy-1,3,5-triazine, 2,4-diamino-6-isopropoxy-1,3,5-triazine, 2,4-diamino-6-mercapto-1,3,5-triazine, 2-amino-4,6-dimercapto-I,3,5-triazine, ammeline, benzguanamine, acetoguanamine, phthalodiguanamine, melamine cyanurate, melamine pyrophosphate, butylene diguanamine, norbornene diguanamine, methylene diguanamine, ethylene dimelamine, trimethylene dimelamine, tetramethylene dimelamine, hexamethylene dimelamine, and 1,3-hexylene dimelamine. These (poly)phosphates may be used alone or in combination of two or more kinds thereof.

Of those mentioned above, the phosphorus-based flame retardant is preferably a salt of (poly)phosphoric acid and a nitrogen compound. The salt is an intumescent flame retardant, and forms a surface expansion layer (intumescent) of foamed char when the resin composition is burned. By forming the surface expansion layer, diffusion of decomposition products and heat transfer are suppressed, and excellent flame retardancy is exhibited.

Examples of nitrogen compounds used herein include ammonia, melamine, piperazine, and other nitrogen compounds described above.

Commercially available phosphorus-based flame retardants include ADEKA STAB FP-2100J, FP-2200, and FP-2500S (manufactured by ADEKA Corporation).

### (Bromine-based Flame Retardant)

Examples of the bromine-based flame retardant include decabromodiphenyl ether, tetrabromobisphenol A, tetrabromobisphenol S, 1,2-bis(2',3',4',5',6'-pentabromophenyl)ethane, 1,2-bis(2,4,6-tribromophenoxy)ethane, 2,4,6-tris(2,4,6-tribromophenoxy)-1,3,5-triazine, 2,6-dibromophenol, 2,4-dibromophenol, brominated polystyrene, ethylenebistctrabromophthalimide, hexabromocyclododecane, hexabromobenzene, pentabromobenzyl acrylate, 2,2-bis[4'(2",3"-dibromopropoxy)-3',5'-dibromophenyl]-propane, bis[3,5-dibromo-4-(2,3-dibromopropoxy)phenyl]sulfone, and tris(2,3-dibromopropyl)isocyanurate.

### (Antimony-based Flame Retardant)

Examples of the antimony-based flame retardant include antimony trioxide, antimony tetroxide, antimony pentoxide, sodium pyroantimonate, antimony trichloride, antimony trisulfide, antimony oxychloride, antimony dichloride perchloropentane and potassium antimonate, and antimony trioxide and antimony pentoxide are particularly preferred.

Of the above flame retardants, a phosphorus-based flame retardant is preferable from the viewpoint of having no biopersistence and having excellent flame retardancy, and a nonhalogen-based flame retardant is preferable from the environmental point of view.

### (Intumescent Flame Retardant)

An intumescent flame retardant is a flame retardant that suppresses the combustion of materials by forming a surface expansion layer (intumescent) that prevents radiant heat from a combustion source and the diffusion of combustion gas and smoke from the combusted material to the outside. Examples of the intumescent flame retardant include a salt of (poly)phosphoric acid and a nitrogen compound. Specific examples include an ammonium salt and an amine salt of (poly)phosphoric acid such as ammonium polyphosphate, melamine polyphosphate, piperazine polyphosphate, ammonium pyrophosphate, melamine pyrophosphate and piperazine pyrophosphate.

The above flame retardants can be used alone or in combination of two or more kinds thereof.

### (Content of Flame Retardant)

Although the content of the flame retardant in the battery housing of the present invention is not particularly limited, it is preferably in the range of 1 to 30% by mass. When the content is 1% by mass or more, the battery housing has sufficient flame retardancy, and sufficient flame shielding performance can be obtained. On the other hand, when the content of the flame retardant is 30% by mass or less, the content of the thermoplastic resin is relatively large, so that the molding workability is sufficient. From the above viewpoints, the content of the flame retardant in the battery housing is more preferably in the range of 5 to 25% by mass, and still more preferably in the range of 10 to 20% by mass.

### <Dispersant>

The dispersant is not particularly limited as long as it can disperse the flame retardant in the thermoplastic resin. However, a polymeric dispersant can be preferably used in terms of compatibility with the thermoplastic resin. Preferably, a dispersant that can disperse the flame retardant in the polypropylene-based resin can be used. As the polymeric dispersant, a polymeric dispersant having a functional group is preferable. From the viewpoint of dispersion stability, a polymeric dispersant having a functional group, such as a carboxy group, a phosphoric acid group, a sulfonic acid group, a primary, secondary or tertiary amino group, a quaternary ammonium base, a group derived from nitrogen-containing heterocycles such as pyridine, pyrimidine, and pyrazine is preferred.

In the present invention, a polymeric dispersant having a carboxy group is preferred, and a copolymer of an α-olefin and an unsaturated carboxylic acid is particularly preferred when a phosphorus-based flame retardant suitable as a flame retardant is used. By using the dispersant, the dispersibility of the phosphorus-based flame retardant can be improved, and the content of the flame retardant can be reduced.

### <<Copolymer of α-olefin and Unsaturated Carboxylic Acid>>

In the "copolymer of an α-olefin and an unsaturated carboxylic acid" (hereinafter sometimes simply referred to as "copolymer") according to the present invention, it is preferable that the proportion of the α-olefin unit in the total 100 mol% of the α-olefin unit and the unsaturated carboxylic acid unit is 20 mol% or more and 80 mol% or less.

In the copolymer, the proportion of the α-olefin unit to the total amount of the α-olefin unit and the unsaturated carboxylic acid unit is more preferably 30 mol% or more, and more preferably 70 mol% or less. When the proportion of the α-olefin is equal to or more than the lower limit, the compatibility with the polyolefin-based resin is more excellent, and when the proportion of the α-olefin is equal to or less than the upper limit, the compatibility with the flame retardant is more excellent.

In the copolymer, the α-olefin is preferably an α-olefin having 5 or more carbon atoms, and more preferably an α-olefin having 10 or more and 80 or less carbon atoms. When the number of carbon atoms in the α-olefin is 5 or more, compatibility with the polyolefin resin tends to be better, and when the number of carbon atoms is 80 or less, it is advantageous in terms of raw material cost. From the above viewpoints, the number of carbon atoms in the α-olefin is further more preferably 12 or more and 70 or less, and particularly preferably 18 or more and 60 or less.

Examples of the unsaturated carboxylic acid in the copolymer include (meth)acrylic acid, maleic acid, methylmaleic acid, fumaric acid, methylfumaric acid, tetrahydrophthalic acid, itaconic acid, citraconic acid, crotonic acid, isocrotonic acid, glutaconic acid, norbomane-5-ene-2,3-dicarboxylic acid, and esters, anhydrides and imides of these unsaturated carboxylic acids. The "(meth)acrylic acid" indicates acrylic acid or methacrylic acid.

Specific examples of esters, anhydrides and imides of the unsaturated carboxylic acids include (meth)acrylic acid esters, such as methyl (meth)acrylate, ethyl (meth)acrylate, butyl (meth)acrylate, 2-ethylhexyl (meth)acrylate, and glycidyl methacrylate; dicarboxylic acid anhydrides, such as maleic anhydride, itaconic anhydride, citraconic anhydride, and 5-norbornene-2,3-dicarboxylic anhydride; and maleimide compounds, such as maleimide, N-ethylmaleimide, and N-phenylmaleimide. These may be used alone or in combination of two or more kinds thereof.

Among the above, esters and dicarboxylic acid anhydrides are preferable from the viewpoint of copolymerization reactivity. Of these, dicarboxylic acid anhydrides are preferred, and maleic anhydrides are particularly preferred, from the viewpoint of compatibility with a phosphorus-based flame retardant suitable as a flame retardant.

The weight average molecular weight of the copolymer is preferably 2,000 or more, more preferably 3,000 or more, and it is preferably 50,000 or less, more preferably 30,000 or less. When the weight average molecular weight of the copolymer is within the above range, the dispersibility of the flame retardant will be more excellent.

The weight average molecular weight of the copolymer is a standard polystyreneequivalent value measured by gel permeation chromatography after dissolving the copolymer in tetrahydrofuran (THF).

Commercially available products of the copolymer include LOCOLUB CE2 (manufactured by Clariant Japan Co., Ltd.) and DIACARNA 30M (manufactured by Mitsubishi Chemical Corporation).

### (Content of Dispersant)

Although the content of the dispersant in the battery housing of the present invention is not particularly limited, it is preferably in the range of, with respect to 100 parts by mass of the flame retardant, more than 0 and 25 parts by mass or less, and more preferably in the range of 0.1 to 20 parts by mass. According to the studies of the present inventors, in the fiber-reinforced resin constituting the battery housing, the presence of the flame retardant uniformly dispersed in the inorganic fibers can significantly improve the flame shielding performance of the battery housing. Although the detailed mechanism is unknown, the present inventors presume as follows. That is, by uniformly dispersing the flame retardant with the thermoplastic resin as a matrix resin, the flame shielding performance of the battery housing can be significantly improved. Although the detailed mechanism is unknown, the present inventors presume as follows. That is, when the flame retardant is uniformly dispersed in the resin between the inorganic fibers, the char formed by the flame retardant coming into contact with the flame is fixed in gaps between the inorganic fibers. Furthermore, the size of the char that expands and forms when contacting the flame is restricted by the gaps between the inorganic fibers, so that the size of the formed char becomes uniform. It is believed that the combination of the effect of fixing the char by the inorganic fibers and the uniformity of the size of the char results in the formation of a dense char, which significantly improves the flame shielding performance of the battery housing. Based on these findings, the present inventors have found that by setting the ratio of the content of the dispersant to the flame retardant within a specific range, the flame retardant can be controlled to be uniformly present in the resin between the inorganic fibers, and the flame shielding performance of the battery housing can be significantly improved. For the above reasons, when the content of the dispersant is more than 0, the dispersibility of the flame retardant is improved. On the other hand, when the content is 25 parts by mass or less, the moldability is improved and the appearance is also improved. From the above viewpoints, the content of the dispersant is even more preferably in the range of 1 to 15 parts by mass, and particularly preferably in the range of 2 to 10 parts by mass, with respect to 100 parts by mass of the flame retardant.

In addition, the proportion of the dispersant to a total of 100 parts by mass of the thermoplastic resin and the flame retardant is preferably 0.01 parts by mass or more, more preferably 0.05 parts by mass or more, and still more preferably 0.1 parts by mass or more. On the other hand, it is preferably 10 parts by mass or less, more preferably 5.0 parts by mass or less, still more preferably 2.0 parts by mass or less, further more preferably 1.5 parts by mass or less, and still more preferably 1.0 parts by mass or less. When the proportion of the dispersant is equal to or more than the above lower limit, the flame retardant will be better dispersed, and the flame retardancy and physical properties of the resin composition, and the appearance of the resulting molded article will be further improved. When the proportion of the dispersant is equal to or less than the above upper limit, the influence of the dispersant on the flame retardancy of the resin composition can be further suppressed.

In particular, the proportion of the dispersant to a total of 100 parts by mass of the polyolefin-based resin and the flame retardant is preferably 0.01 parts by mass or more, more preferably 0.05 parts by mass or more, and still more preferably 0.1 parts by mass or more. On the other hand, it is preferably 10 parts by mass or less, more preferably 5.0 parts by mass or less, still more preferably 2.0 parts by mass or less, further more preferably 1.5 parts by mass or less, and particularly preferably 1.0 parts by mass or less.

The proportion of the dispersant to 100 parts by mass of the inorganic fibers is preferably 0.01 parts by mass or more, more preferably 0.05 parts by mass or more, and still more preferably 0.1 parts by mass or more. On the other hand, it is preferably 10 parts by mass or less, more preferably 5.0 parts by mass or less, and even more preferably 2.0 parts by mass or less. When the proportion of the dispersant is equal to or more than the above lower limit, the resulting battery housing will have better flame shielding performance, physical properties, and appearance. When the proportion of the dispersant is equal to or less than the above upper limit, the influence of the dispersant on the flame shielding performance of the battery housing can be further suppressed.

### <Optional Additive Component>

In the battery housing of the present invention, in addition to the above components, any additive component can be blended for a purpose of imparting other effects, such as further improving the effects of the present invention, within a range that does not significantly impair the effects of the present invention.

Specific examples thereof include a colorant such as a pigment, a light stabilizer such as a hindered amine-based light stabilizer, a UV absorber such as a benzotriazole-based UV absorber, a nucleating agent such as a sorbitol-based nucleating agent, an antioxidant such as a phenol-based and a phosphorus-based antioxidant, an antistatic agent such as a nonionic surfactant, a neutralizing agent such as an inorganic compound, an antibacterial and antifungal agent such as a thiazole-based antibacterial and antifungal agent, a flame retardant such as a halogen compound, a plasticizer, a dispersant such as an organic metal salt-based dispersant, a lubricant such as a fatty acid amide-based lubricant, a metal deactivator such as a nitrogen compound, a polyolefin resin other than the aforementioned polypropylene-based resin, a thermoplastic resin such as a polyamide resin and a polyester resin, and an elastomer such as an olefin-based elastomer and a styrene-based elastomer (rubber component).

These optional additive components may be used in combination of two or more kinds thereof.

As the colorant, for example, an inorganic or organic pigment and the like are effective in imparting and improving colored appearance, attractiveness, texture, commercial value, weather resistance, durability, etc. of the polypropylene-based resin composition and a molded article thereof.

Specific examples of the inorganic pigment include carbon black, such as furnace carbon and ketjen carbon; titanium oxide; iron oxide (red iron oxide, etc.); chromic acid (chrome, etc.); molybdic acid; selenide sulfide; and ferrocyanide. Specific examples of the organic pigment include a sparingly soluble azo lake, a soluble azo lake, an insoluble azo chelate; a condensable azo chelate; an azo pigment such as other azo chelates; a phthalocyanine pigment, such as phthalocyanine blue and phthalocyanine green; a threne-based pigment, such as anthraquinone, perinone, perylene, and thioindigo; a dye lake; a quinacridone-based pigment; a dioxazine-based pigment; and an isoindolinone-based pigment. In addition, an aluminum flake or a pearl pigment can be contained to give a metallic tone or a pearly tone. A dye can also be contained.

A hindered amine compound, a benzotriazole-based, benzophenone-based, or salicylate-based light stabilizer and or UV absorber is effective in imparting and improving the weather resistance and durability of the polypropylene-based resin composition and a molded article thereof, and is effective in further improving weather-resistance discoloration properties.

Specific examples of the hindered amine compound include a condensation product of dimethyl succinate and 1-(2-hydroxyethyl)-4-hydroxy-2,2,6,6-tetramethylpiperidine; poly[[6-(1,1,3,3-tetramethylbutyl)imino-1,3,5-triazine-2,4-diyl][(2,2,6,6-tetramethyl-4-piperidyl)imino]hexamethylene[(2,2,6,6-tetramethyl-4-piperidyl)imino]]; tetrakis(2,2,6,6-tetramethyl-4-piperidyl)1,2,3,4-butanetetracarboxylate; tetrakis( 1,2,2,6,6-pentamethyl-4-piperidyl) 1 ,2,3,4-butane tetracarboxylate; bis(1,2,2,6,6-pentamethyl-4-piperidyl)sebacate; and bis-2,2,6,6-tetramethyl-4-piperidyl sebacate. Examples of a benzotriazole-based one include 2-(2'-hydroxy-3',5'-di-t-butylphenyl)-5-chlorobenzotriazole; and 2-(2'-hydroxy-3'-t-butyl-5'-methylphenyl)-5-chlorobenzotriazole. Examples of a benzophenone-based one include 2-hydroxy-4-methoxy benzophenone; and 2-hydroxy-4-n-octoxybenzophenone. Examples of a salicylate-based one include 4-t-butylphenyl salicylate; and 2,4-di-t-butylphenyl 3',5'-di-t-butyl-4'-hydroxybenzoate.

Here, a method of using the light stabilizer and the UV absorber in combination is preferable because it has a large effect of improving weather resistance, durability, weather-resistance discoloration properties, and the like.

As an antioxidant, for example, a phenol-based, phosphorus-based or sulfur-based antioxidant is effective in imparting and improving heat resistance, processing stability, heat aging resistance, and the like of the polypropylene-based resin composition and a molded article thereof.

Also, as an antistatic agent, for example, a nonionic or cationic antistatic agent is effective in imparting and improving the antistatic property of the polypropylene-based resin composition and a molded article thereof.

Examples of the olefin-based elastomer include an ethylene/α-olefin copolymer elastomer, such as an ethylene/propylene copolymer elastomer (EPR), an ethylene/butene copolymer elastomer (EBR), an ethylene/hexene copolymer elastomer (EHR), and an ethylene/octene copolymer elastomer (EOR); an ethylene/α-olefin/diene terpolymer elastomer, such as an ethylene/propylene/ethylidene norbornene copolymer, an ethylene/propylene/butadiene copolymer, and an ethylene/propylene/isoprene copolymer, and a styrene/butadiene/styrene triblock copolymer elastomer (SBS).

Examples of the styrene-based elastomer include a styrene-based elastomer, such as a styrene/isoprene/styrene triblock copolymer elastomer (SIS), a styrene-ethylene/butylene copolymer elastomer (SEB), a styrene-ethylene propylene copolymer elastomer (SEP), a styrene-ethylene/butylene-styrene copolymer elastomer (SEBS), a styrene-ethylene/butylene-ethylene copolymer elastomer (SEBC), a hydrogenated styrene/butadiene elastomer (HSBR), a styrene-ethylene/propylene-styrene copolymer elastomer (SEPS), a styrene-ethylene/ethylene/propylene-styrene copolymer elastomer (SEEPS), a styrenebutadiene/butylene-styrene copolymer elastomer (SBBS), a partially hydrogenated styreneisoprene-styrene copolymer elastomer, and a partially hydrogenated styreneisoprene/butadiene-styrene copolymer elastomer, and further a hydrogenated polymer-based elastomer, such as an ethylene-ethylene/butylene-ethylene copolymer elastomer (CEBC).

Of these, it is preferable that an ethylene/octene copolymer elastomer (EOR) and/or an ethylene/butene copolymer elastomer (EBR) is used from the viewpoint that the polypropylene-based resin composition of the present invention and a molded article thereof tend to be easily imparted with appropriate flexibility and have excellent impact resistance.

### <Structure of Battery Housing>

Although the thickness of the battery housing of the present invention is not particularly limited, it is preferably 0.5 mm or more, more preferably 1.0 mm or more, and even more preferably 2.0 mm or more. When the thickness of the battery housing is equal to or more than the above lower limit, it is preferable from the viewpoints of moldability, mechanical strength, and flame shielding performance. Also, the thickness of the battery housing is preferably 10 mm or less, more preferably 8 mm or less, and particularly preferably 6 mm or less. It is preferable that the thickness is equal to or less than the above upper limit, because it is easy to adapt to the size of the space in which it is arranged, as well as from the viewpoint of weight reduction and moldability.

### <Production Method of Battery Housing>

Various methods can be used as the method for producing the battery housing of the present invention. However, press molding is preferable from the viewpoint of productivity. For press molding, it is preferable to prepare a stampable sheet made of the fiber-reinforced resin of the present invention, stack a plurality of the stampable sheets, and press mold the stampable sheets. It is preferable that the stampable sheet containing a highly heat-resistant fiber is sandwiched between other stampable sheets from both sides such that the highly heat-resistant fiber can easily flow over the entire sheet. When stacking a plurality of stampable sheets containing highly heat-resistant fibers, it is preferable to stack the stampable sheets such that the stampable sheets are centered as much as possible.

### (Production of Stampable Sheet)

The stampable sheet is preferably produced by impregnating a mat made of fibers with a thermoplastic resin composition. Examples of impregnation methods include a method of applying a thermoplastic resin composition to a fiber mat such as an inorganic fiber mat, and a method of preparing a sheet of a thermoplastic resin composition, laminating the sheet on a fiber mat, and heating and melting to impregnate the sheet.

In the present invention, from the viewpoint of surface smoothness of the stampable sheet, a method of laminating a thermoplastic resin sheet on a fiber mat and heating and melting is preferred. In particular, it can be obtained by laminating a fiber mat between two thermoplastic resin sheets, then heating and pressurizing the laminate, and then cooling and solidifying the laminate.

### <<Thermoplastic Resin Composition>>

The thermoplastic resin composition is a resin composition containing a thermoplastic resin, a flame retardant, a dispersant, and optional additives, etc., excluding the fiber. As a production method, a conventionally known method can be used, and the composition can be produced by blending, mixing, and melt-kneading the above components.

Mixing is performed using a mixer such as a tumbler, a V blender, and a ribbon blender. Melt kneading is performed by melt-kneading and granulating using equipment such as a single screw extruder, a twin screw extruder, a Banbury mixer, a roll mixer, a Brabender plastograph, and a kneader.

### (Fiber Mat)

The form of the fibers used in the stampable sheet production method is not particularly limited, and various forms can be used. However, those in the form of a mat or sheet are preferred.

More specifically, in the present invention, it is preferable to use a mat formed of highly heat-resistant fibers typified by alumina fibers (hereinafter referred to as "highly heat-resistant fiber mat"), and in addition, it is preferable to use a mat formed of glass fibers (hereinafter referred to as "glass fiber mat").

The basis weight (mass per unit area) of the fiber mat is not particularly limited and is appropriately determined according to the application. However, it is preferably 300 g/m² or more, more preferably greater than 500 g/m², further preferably greater than 700 g/m², still more preferably greater than 900 g/m², and particularly preferably greater than 1000 g/m². Moreover, the basis weight of the fiber mat is not particularly limited; however, it is preferably 5000 g/m² or less, more preferably 4500 g/m² or less, still more preferably 4000 g/m² or less, and particularly preferably 3500 g/m² or less.

Although the thickness of the fiber mat according to the present invention is not particularly limited, it is preferably 4 mm or more, more preferably 5 mm or more, and even more preferably 6 mm or more. Also, the thickness of the fiber mat is preferably 40 mm or less, more preferably 35 mm or less, and particularly preferably 30 mm or less.

The basis weight per unit area or the thickness of the fiber mat can be set within the above range by adjusting the amount of fiber per unit area when fiber aggregates constituting the fiber mat are laminated using a folding device. In addition, the fiber mat of the present invention may have a structure in which a plurality of fiber mats are bonded together or a single structure. However, a single structure is preferred from the viewpoint of handling properties and peel strength at a bonding interface.

### (Glass Fiber Mat)

Examples of the form of the glass fiber mat used in the present invention include felt and blanket processed with short glass fiber cotton, a chopped strand mat obtained by processing continuous glass fiber, a swirl (spiral) mat of continuous glass fiber, and a unidirectional aligned mat. Of these, a glass fiber mat obtained by needle-punching a swirl (spiral) mat of continuous glass fiber is particularly preferable because the strength and impact resistance of the stampable sheet are excellent.

In a method of laminating a thermoplastic resin sheet on a fiber mat and heating and melting, appropriate conditions may be selected according to the types of thermoplastic resins. Preferred conditions where polypropylene is used are described below.

The heating temperature is preferably 170 to 300°C. When the heating temperature is 170°C or higher, the polypropylene-based resin has sufficient fluidity, the fiber mat can be sufficiently impregnated with the polypropylene composition, and a suitable stampable sheet can be obtained. On the other hand, when the heating temperature is 300°C or less, the polypropylene composition will not deteriorate.

Furthermore, the applied pressure is preferably 0.1 to 1 MPa. When the applied pressure is 0.1 MPa or more, the fiber mat can be sufficiently impregnated with the polypropylene composition, and a suitable stampable sheet can be obtained. On the other hand, when the pressure is 1 MPa or less, the polypropylene composition will flow and burrs will not occur.

In addition, the cooling temperature is not particularly limited as long as it is equal to or lower than the freezing point of the thermoplastic resin in the polypropylene composition. However, when the cooling temperature is 80°C or lower, the obtained stampable sheet is not deformed when taken out. From the above point of view, the cooling temperature is preferably room temperature to 80°C.

Methods for obtaining a stampable sheet by heating, pressurizing, and cooling the laminate include a method of press-molding the laminate in a mold equipped with a heating device, and a lamination processing of passing the laminate between two pairs of rollers equipped with a heating device to heat and pressurize the laminate. In particular, lamination processing is preferable because it allows continuous production, resulting in good productivity.

### <Thickness of Stampable Sheet>

The thickness of the stampable sheet of the present invention is usually 1 to 10 mm, preferably 2 to 5 mm. When the thickness of the stampable sheet is 1 mm or more, it is easy to produce the stampable sheet. On the other hand, when the thickness of the stampable sheet is 10 mm or less, in the case where the stampable sheet is processed by stamping molding or the like, it is unnecessary to preheat for a long time, and good moldability can be obtained.

### <Thermosetting Resin>

Although the resin constituting the fiber-reinforced resin of the present invention is not particularly limited, it can be a thermosetting resin. The thermosetting resin is not particularly limited, and examples thereof include a vinyl urethane resin, an unsaturated polyester resin, an acrylic resin, an epoxy resin, a phenol resin, a melamine resin, and a furan resin. In addition, these thermosetting resins may be used alone or in combination of two or more kinds thereof. Of these, a vinyl urethane resin, an epoxy resin, and a phenol resin are preferred from the viewpoints of physical properties, versatility, cost, etc. of the resin.

In the present invention, the thermosetting resin and the fiber can be composited and used as a fiber-reinforced composite material. For the fiber-reinforced composite material, a prepreg in which a reinforcing fiber base material containing continuous fibers is impregnated with a thermosetting resin composition, or a sheet molding compound (SMC) in which a reinforcing fiber base material containing short fibers is impregnated with a thermosetting resin composition is used.

Compression molding of fiber-reinforced composite materials is widely used as a method of producing fiber-reinforced composite material molded articles.

### <<Content of Thermosetting Resin>>

The content of the thermosetting resin in the battery housing of the present invention is preferably 20 to 80% by mass. When the content of the thermosetting resin is 20% by mass or more, the molding workability is sufficient, and the molding of the battery housing becomes easy. On the other hand, when the content of the thermosetting resin is 80% by mass or less, the contents of the flame retardant, the dispersant and the inorganic fiber become sufficient, and sufficient flame shielding performance can be obtained. From the above viewpoints, the content of the thermosetting resin in the battery housing is preferably 35 to 70% by mass, and more preferably 40 to 60% by mass.

### <Method for Producing Battery Housing Using Thermosetting Resin>

Although various methods can be used as a method for producing the battery housing of the present invention using a thermosetting resin, press molding is preferable from the viewpoint of productivity. At the time of press molding, a prepreg in which a reinforcing fiber base material containing continuous fibers is impregnated with a thermosetting resin composition, or a sheet molding compound (SMC) in which a reinforcing fiber base material containing short fibers is impregnated with a thermosetting resin composition is used.

### [Structure]

The structure of the present invention has a battery housing and a battery cell. The battery housing of the present invention is as described in detail above.

A battery is preferable as the structure in the present invention, and the battery is not particularly limited. Examples thereof include a secondary battery, such as a lithium ion battery, a nickel-hydrogen battery, a lithium-sulfur battery, a nickel-cadmium battery, a nickel-iron battery, a nickel-zinc battery, a sodium-sulfur battery, a lead-acid battery, and an air battery. Of these batteries, a lithium ion battery is preferred, and in particular, the battery housing of the present invention is suitably used for suppressing thermal runaway of the lithium ion battery. That is, the battery housing of the present invention is preferably a battery housing for a lithium ion battery.

### [Electric Mobility]

"Electric mobility" in the present invention refers to transportation equipment such as vehicles, ships, and airplanes that operate using electricity as an energy source. Vehicles include not only electric vehicles (EV) but also hybrid vehicles.

A structure such as a battery having a battery housing according to the present invention and a battery cell as described above is highly safe and is very useful for electric mobility using a battery module with high energy density in order to extend driving distance. Examples

The first aspect of the present invention will be described in detail below using Examples; however, the present invention is not limited to these Examples. (1) Stampable sheet

### (Evaluation Method)

### 1. Rigidity evaluation (flexural modulus and bending stress)

The flexural modulus and bending stress of the stampable sheet were measured at a measurement atmosphere temperature of 23°C (unit: MPa) in accordance with JIS K7171, using a test piece having a thickness of 3.0 mm, a width of 10.0 mm, and a length of 80 mm cut from a molded article obtained by stacking three stampable sheets used in a "workability" test described later and press-molding the stacked stampable sheets.

### 2. Evaluation of flame shielding performance

The stampable sheets prepared in each Example and Comparative Example were exposed to a burner flame of 1200°C from one surface, and evaluated by whether or not the flame penetrated after 10 minutes. Evaluation criteria are as follows. In addition, the evaluation of the flame shielding performance of the stampable sheet was performed using a test piece having a thickness of 3.0 mm, a width of 200 mm, and a length of 200 mm cut from a molded article obtained by stacking three stampable sheets used in the workability test described later and press-molding the stacked stampable sheets in Examples 1 and 2. In Comparative Examples and Examples 3 to 5, the evaluation was carried out using a test piece having a thickness of 3.8 mm, a width of 200 mm, and a length of 200 mm.
A: The flame did not penetrate, and the appearance of the exposed fibers was good even after the experiment.
B: The flame did not penetrate; however, foaming was observed in the exposed fibers after the experiment.
C: The flame did not penetrate; however, most of the exposed fibers dissolved after the experiment.
D: The flame penetrated.

### 3. Evaluation of thermal insulation properties

The stampable sheets prepared in each Example and Comparative Example were exposed to a burner flame of 1200°C from one surface, and the temperature of a back surface was measured. The temperature after 10 minutes was described in Table 1. The thermal insulation properties can be evaluated at the same time as the evaluation of the flame shielding performance, and the stampable sheet used had the same form as mentioned above.

### 4. Workability

The workability was evaluated according to the following procedure.

First, three stampable sheets of 120 mm × 230 mm × 3.8 mm were stacked, heated to 230°C with an infrared heater, press-molded under conditions of a mold temperature of 45°C and a molding pressure of 50 kg/cm2 to be processed into a box-shaped molded article of 300 mm × 180 mm × 3 mm × 65 mm. Thereafter, it was visually evaluated according to the following evaluation criteria.
A: The polypropylene-based resin composition is filled to an end of the molded article.
B: The polypropylene-based resin composition is not filled to an end of the molded article.

### (Materials Used)

### 1. Polypropylene-based resin (component A)

"Novatec PP" (melt flow rate: 60 g/10 minutes) manufactured by Japan Polypropylene Corporation was used.

### 2. Flame retardant (component B)

A phosphorus-based flame retardant composition (manufactured by ADEKA Corporation, ADEKA STAB FP-2200, containing, with respect to the total mass of the phosphorus-based flame retardant composition, 50 to 60% by mass of piverazine pyrophosphate, 35 to 45% by mass of melamine pyrophosphate, and 3 to 6% by mass of zinc oxide)

### 3. Dispersant (component C)

α-olefin/maleic anhydride copolymer (manufactured by Mitsubishi Chemical Corporation, DIACARNA 30M, weight average molecular weight 7,800).

### 4. Glass fiber mat (component D)

A glass fiber mat obtained by needle-punching a swirl (spiral) mat (basis weight: 890 g/m²) made from continuous roving glass fibers (fiber diameter: 23 µm) was used.

### 5. Alumina fiber mat (component D)

An alumina fiber mat obtained by needle-punching a mat (basis weight: 900 g/m²) made from commercially available crystalline alumina fiber ("MAFTEC" (registered trademark) manufactured by Mitsubishi Chemical Corporation) was used.

### Preparation Example 1-1 (Preparation of PP Composition)

The above components A, B, and C were melt-kneaded (230°C) in the proportions shown in Table 1 to prepare pellets of the polypropylene-based resin composition (PP composition) 1.

### Example 1-1

The pellets of the PP composition 1 granulated in Preparation Example 1-1 were placed in an extruder, melted, and then extruded and molded into a sheet shape. At the same time, the extruded sheet-shaped PP 11, a glass fiber mat 12 or an alumina fiber mat were laminated by supplying the PP 11 as an outermost layer and supplying the glass fiber mat 12 or the alumina fiber mat 23 therebetween such that they were respectively in mass ratios shown in Table 1. Thereafter, by heating and pressurizing at 230°C for 4 minutes while applying a pressure of 0.3 MPa using a laminator, followed by cooling and solidifying, a stampable sheet (thickness: 3.8 mm) was obtained (see Fig. 1). The PP sheet was impregnated with glass mat fibers to obtain an integrated stampable sheet. The results of evaluation by the above method are shown in Table 1. In each of Examples 1 to 5 and Comparative Example 1, the stampable sheet was prepared such that, in addition to the components shown in Table 1, optional additive components were added so that the total was 100% by mass.

### Example 1-2

A stampable sheet was obtained in the same manner as in Example 1-1, except that in Example 1-1, one of the glass fiber mats arranged on both sides of the extruded sheet-shaped PP was changed to an alumina fiber mat. The layer structure is shown in Fig. 2. Further, the results of evaluation by the above method are shown in Table 1. In the evaluation of the flame shielding performance, the flame was applied from the side of the alumina fiber mat.

### Example 1-3

A stampable sheet was obtained in the same manner as in Example 1-1, except that in Example 1-1, one of the glass fiber mats arranged on both sides of the extruded sheet-shaped PP was changed to an alumina fiber mat, and the amount of the flame retardant was changed to 3.2% by mass. Further, the results of evaluation by the above method are shown in Table 1. In the evaluation of the flame shielding performance, the flame was applied from the side of the alumina fiber mat.

### Examples 1-4

A stampable sheet was obtained in the same manner as in Example 1-1, except that in Example 1-1, the amount of the flame retardant was changed to 8.8% by mass and the amount of the dispersant was changed to 0.5% by mass.

### Examples 1-5

A stampable sheet was obtained in the same manner as in Example 1-1, except that in Example 1-1, the amount of the flame retardant was changed to 5.8% by mass and the amount of the dispersant was changed to 0.5% by mass.

### Comparative Example 1-1

A stampable sheet was obtained in the same manner as in Example 1-1, except that in Example 1-1, instead of the pellets of the PP composition 1 granulated in Preparation Example 1-1, only the aforementioned component A was melted (230°C) and the granulated PP was used. The results of evaluation by the above method are shown in Table 1.

### Comparative Example 1-2

A stampable sheet was obtained in the same manner as in Example 1-2, except that in Example 1-2, no dispersant was added and the composition of the resin composition was changed to that shown in Table 1. The results of evaluation by the above method are shown in Table 1.

### Comparative Example 1-3

A stampable sheet was obtained in the same manner as in Example 1-2, except that in Example 1-2, the composition of the resin composition was changed to that shown in Table 1. The results of evaluation by the above method are shown in Table 1.

### Comparative Example 1-4

A stampable sheet was obtained in the same manner as in Example 1-2, except that in Example 1-2, the composition of the resin composition was changed to that shown in Table 1. The results of evaluation by the above method are shown in Table 1.

**Table 1**

| | | Comp. Ex. 1-1 | Comp. Ex. 1-2 | Comp. Ex. 1-3 | Comp. Ex. 1-4 | Ex. 1-1 | Ex. 1-2 | Ex. 1-3 | Ex. 1-4 | Ex. 1-5 |
|---|---|---|---|---|---|---|---|---|---|---|
| Resin composition | Component (A) (% by mass) | 57.5 | 53.1 | 51.5 | 50.1 | 42.0 | 42.0 | 54.7 | 49.9 | 52.4 |
| | Component (B) (% by mass) | - | 5.9 | 5.7 | 5.6 | 18.0 | 18.2 | 3.2 | 8.8 | 5.8 |
| | Component (C) (% by mass) | - | - | 1.7 | 3.3 | 0.6 | 0.5 | 0.3 | 0.5 | 0.5 |
| Inorganic fiber mat | Glass fiber (% by mass) | 39.5 | 36.1 | 36.1 | 36.1 | 18.0 | 36.1 | 19.4 | 37.7 | 38.2 |
| | Alumina fiber | - | - | - | - | 18.2 | - | 19.6 | - | - |
| Evaluation results | Tensile strength (MPa) | 100 | - | - | - | 64 | 89 | - | 90 | 91 |
| | Bending strength (MPa) | 170 | - | - | - | 171 | 169 | - | 154 | 170 |
| | Flexural modulus (MPa) | 5500 | - | - | - | 5964 | 5782 | - | 5336 | 5463 |
| | Izod impact value (J/m) | 900 | - | - | - | 589 | 891 | - | 860 | 856 |
| | Flame shielding performance | D | D | D | D | A | B | B | B | B |
| | Inner side temperature (°C) | - | - | - | - | 345.0 | 394.0 | 435.8 | 413.0 | 362.0 |
| | Workability | A | A | A | A | A | A | A | A | A |

As shown in Examples 1-1 to 1-5, the stampable sheet of the present invention had excellent flame shielding performance, and the flame was blocked even after 600 seconds (10 minutes) had passed, and the flame did not spread to the back surface. As for the thermal insulation properties, the back surface temperatures reached 345°C to 440°C, respectively.

In contrast, in Comparative Example 1-1, the flame penetrated the back surface in about 120 seconds. Similarly, in Comparative Examples 1-2 to 1-4, the flame penetrated the back surface.

In addition, it can be seen that the stampable sheet of the present invention is excellent in rigidity and workability despite containing a phosphorus-based flame retardant.

### 2. Battery housing

### (Evaluation Method)

### Evaluation of flame shielding performance

The battery housings prepared in each Example and Comparative Example are fixed in a state where 150 mm × 150 mm of the battery housing is exposed such that a flame can be applied to the same place. Using an acetylene torch burner with a diameter of 1.2 mm (WT-01, manufactured by Sakaguchi Seisakusho), a flame was applied with a distance between the sample and the burner adjusted to 145 mm under conditions of 0.15 MPa of oxygen and 0.001 MPa of acetylene such that the sample surface temperature became 1200°C. The flame was applied for 5 minutes, and the flame shielding performance was evaluated by visually confirming whether or not the flame penetrated. Evaluation criteria are as follows.
A: The flame did not penetrate and the back surface temperature of the flame contact surface was lower than 350°C.
B: The flame did not penetrate; however, the back surface temperature of the flame contact surface was 350°C or higher.
C: The flame penetrated. It took 1 minute or longer to penetrate.
D: The flame penetrated. It took less than 1 minute to penetrate.

For battery housings prepared by combining different types of stampable sheets, the other surface was also evaluated for flame shielding performance in the same manner as above. The evaluation criteria are also the same.

For battery housings prepared from one type of stampable sheet, since both surfaces are the same, only the result of the evaluation of the flame shielding performance performed on one side was described.

### (Materials Used)

### 1. Polypropylene-based resin (component A)

"Novatec PP" (melt flow rate: 60 g/10 minutes) manufactured by Japan Polypropylene Corporation

### 2. Flame retardant

A phosphorus-based flame retardant composition (manufactured by ADEKA Corporation, ADEKA STAB FP-2200, containing, with respect to the total mass of the phosphorus-based flame retardant composition, 50 to 60% by mass of piverazine pyrophosphate, 35 to 45% by mass of melamine pyrophosphate, and 3 to 6% by mass of zinc oxide)

### 3. Dispersant

α-olefin/maleic anhydride copolymer (manufactured by Mitsubishi Chemical Corporation, DIACARNA 30M, weight average molecular weight 7,800).

### 4. Glass fiber mat

A glass fiber mat obtained by needle-punching a swirl (spiral) mat (basis weight: 880 g/m²) made from continuous roving glass fibers (fiber diameter: 23 µm) was used.

### 5. Alumina fiber mat

A mat (weight per unit area: 900 g/m²) made from commercially available crystalline alumina fiber ("MAFTEC" (registered trademark) manufactured by Mitsubishi Chemical Corporation) was used.

### 6. Silica fiber mat

A commercially available silica fiber mat ("KSM700-6", manufactured by Kowa Co., Ltd., weight per unit area: 700 g/m²) was used.

### 7. Alkaline earth silicate fiber mat

A commercially available alkaline earth silicate fiber mat (biosoluble fiber blanket "S-4200H", thickness: 12.5 mm, density: 128 kg/m³, manufactured by Sowa Kogyo Co., Ltd.) was used.

### Preparation Example 2-1 (Preparation of Polypropylene-based Resin Composition)

The polypropylene-based resin, the flame retardant, and the dispersant were melt-kneaded (230°C) in the proportions shown in Table 2 to prepare pellets of a polypropylene-based resin composition (hereinafter referred to as "PP composition 2").

### Example 2-1

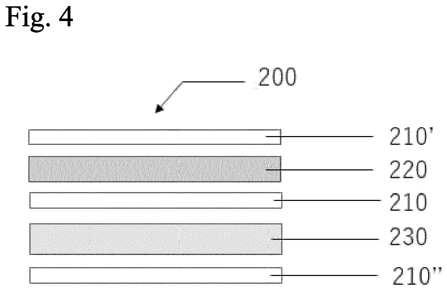

A description will be given below with reference to Fig. 4.

The pellets of the PP composition 2 granulated in Preparation Example 2-1 were placed in an extruder, melted, and then extruded and molded into a sheet shape. At the same time, the extruded sheet-shaped PP (210, 210' and 210" in Fig. 4), a glass fiber mat 230, and an alumina fiber mat 220 were laminated by supplying the PP as an outermost layer and supplying the glass fiber 230 and the alumina fiber mat 220 therebetween such that they were respectively in mass ratios of a and b in Table 1. Thereafter, by heating and pressurizing at 230°C for 4 minutes while applying a pressure of 0.3 MPa using a laminator, followed by cooling and solidifying, a stampable sheet (thickness: 3.8 mm) was obtained.

### Molding of Housing Cover

Two stampable sheets a and one stampable sheet b obtained above were used and stacked such that b was sandwiched by a's from both sides, and the materials were preheated in a far-infrared heating furnace (set temperature: 270 to 300°C) for 4 minutes to a temperature of 210°C.

Then, the stampable sheets were held for 30 seconds while applying a pressure of 150 kg/cm² in a press machine equipped with a mold, followed by cooling and solidification to obtain a box-shaped molded article (thickness: 3.0 mm). The results of evaluation by the above method are shown in Table 3. In each of Examples 2-1 to 2-3, and Comparative Example 2-1, the stampable sheets a to f were prepared such that, in addition to the components shown in Tables 2 and 3, optional additive components were added so that the total was 100% by mass.

### Example 2-2

A molded article (thickness: 3.0 mm) was obtained in the same manner as in Example 2-1, except that in the method for producing a stampable sheet of Example 2-1, the contents of the polypropylene resin, the flame retardant, and the dispersant in the resin composition were changed as c and d shown in Table 2, and the housing cover was molded with the stampable sheets stacked such that d was sandwiched by c's from both sides, and the mass ratio was changed to that shown in Table 2. The results of evaluation by the above method are shown in Table 3.

### Example 2-3

A molded article (thickness: 3.0 mm) was obtained in the same manner as in Example 2-1, except that in the method for producing a stampable sheet of Example 2-1, the contents of the polypropylene resin, the flame retardant, and the dispersant in the resin composition were changed as k and g shown in Table 2, and the housing cover was molded with the stampable sheets stacked such that g was sandwiched by k's from both sides, and the mass ratio was changed to that shown in Table 3. The results of evaluation by the above method are shown in Table 3.

### Example 2-4

A molded article (thickness: 3.0 mm) was obtained in the same manner as in Example 2-1, except that in the method for producing a stampable sheet of Example 2-1, the contents of the polypropylene resin, the flame retardant, and the dispersant in the resin composition were changed as k and h shown in Table 2, and the housing cover was molded with the stampable sheets stacked such that h was sandwiched by k's from both sides, and the mass ratio was changed to that shown in Table 3. The results of evaluation by the above method are shown in Table 3.

### Example 2-5

A molded article (thickness: 3.0 mm) was obtained in the same manner as in Example 2-1, except that in the method for producing a stampable sheet of Example 2-1, the contents of the polypropylene resin, the flame retardant, and the dispersant in the resin composition were changed as i shown in Table 2, and the housing cover was molded with three i's stacked, and the mass ratio was changed to that shown in Table 3. The results of evaluation by the above method are shown in Table 3.

### Comparative Example 2-1

A stampable sheet was obtained in the same manner as in Example 2-1, except that in Example 2-1, pellets and chopped carbon fibers were kneaded in a kneader in the proportions of f in Table 2, and the resulting compound was used to form a sheet without using an alumina fiber mat. Thereafter, a molded article (thickness: 3.0 mm) was obtained in the same manner as in Example 2-1 except that the housing cover was molded with three f's stacked, and the mass ratio was changed to that shown in Table 3. The results of evaluation by the above method are shown in Table 3.

**Table 2**

| Stampable sheet | | a | b | c | d | e | f | g | h | i | k |
|---|---|---|---|---|---|---|---|---|---|---|---|
| Resin composition (% by mass) | Polypropylene resin | 42.0 | 42.0 | 57.5 | 54.7 | 57.4 | 61.6 | 49.3 | 48.3 | 51.3 | 47.5 |
| | Flame retardant | 18.2 | 18.0 | 0.0 | 3.2 | 0.0 | 0.0 | 13.3 | 13.0 | 13.8 | 12.8 |
| | Dispersant | 0.5 | 0.6 | 0.0 | 0.3 | 0.0 | 0.0 | 0.4 | 0.4 | 0.5 | 0.4 |
| Fiber mat (% by mass) | Glass fiber | 36.1 | 18.0 | 39.5 | 19.4 | 19.7 | 21.1 | 18.7 | 18.3 | 0.0 | 36.0 |
| | Alumina fiber | 0.0 | 18.2 | 0.0 | 19.6 | 19.9 | 0.0 | 0.0 | 0.0 | 0.0 | 0.0 |
| | Carbon fiber | 0.0 | 0.0 | 0.0 | 0.0 | 0.0 | 14.1 | 0.0 | 0.0 | 0.0 | 0.0 |
| | Silica fiber | 0.0 | 0.0 | 0.0 | 0.0 | 0.0 | 0.0 | 14.9 | 0.0 | 31.0 | 0.0 |
| | Alkaline earth silicate fiber | 0.0 | 0.0 | 0.0 | 0.0 | 0.0 | 0.0 | 0.0 | 16.7 | 0.0 | 0.0 |

**Table 3**

| Housing cover | | Ex. 2-1 | Ex. 2-2 | Comp. Ex. 2-1 | Ex. 2-3 | Ex. 2-4 | Ex. 2-5 |
|---|---|---|---|---|---|---|---|
| Stampable sheet used | | a × 2 b × 1 | c × 2 d × 1 | f × 3 | k × 2 g × 1 | k × 2 h × 1 | i × 3 |
| Resin composition (% by mass) | Polypropylene resin | 42.0 | 56.6 | 61.6 | 48.1 | 47.8 | 51.3 |
| | Flame retardant | 18.1 | 1.1 | 0.0 | 13.0 | 12.9 | 13.8 |
| | Dispersant | 0.5 | 0.1 | 0.0 | 0.4 | 0.4 | 0.5 |
| | Dispersant ratio* | 2.8 | 9.1 | - | 3.1 | 3.1 | 3.6 |
| Fiber mat (% by mass) | Glass fiber | 30.1 | 32.8 | 21.1 | 30.2 | 30.1 | 0.0 |
| | Alumina fiber | 6.1 | 6.5 | 0.0 | 0.0 | 0.0 | 0.0 |
| | Carbon fiber | 0.0 | 0.0 | 14.1 | 0.0 | 0.0 | 0.0 |
| | Silica fiber | 0.0 | 0.0 | 0.0 | 5.0 | 0.0 | 31.0 |
| | Alkaline earth silicate fiber | 0.0 | 0.0 | 0.0 | 0.0 | 5.6 | 0.0 |
| Evaluation result | Flame shielding performance Surface | A | B | D | A | A | A |
| | Flame shielding performance Back Surface | C | A | - | C | C | - |

| | | | | | | | |
|---|---|---|---|---|---|---|---|
| *The dispersant ratio is the content (parts by mass) of the dispersant with respect to 100 parts by mass of the flame retardant. | | | | | | | |

Thus, it can be seen that the battery housing of the present invention containing highly heat-resistant fibers has excellent flame shielding performance. In particular, as shown in Example 2-1, it can be seen that flame shielding performance is more excellent when appropriate amounts of flame retardant and dispersant are contained. In addition, the battery housing of the present invention is lightweight because the main component is resin.

### Industrial applicability

As described above, the stampable sheet of the present invention is excellent in rigidity, flame shielding performance, thermal insulation properties, and workability, and therefore is useful as a material for various industrial parts that require high safety, such as aircraft, ships, automobile parts, electrical and electronic device parts, and building materials. In particular, it can be suitably used for various types of battery housings and casings that have traditionally been made with metal, and is expected to contribute to the safety of automobiles, as well as to improvement of energy efficiency through weight reduction and reduction of CO₂ emissions.

In addition, the battery housing of the present invention has excellent flame shielding performance, and since resin is the main component, it has excellent workability. Moreover, since it is lightweight, a structure using the battery housing of the present invention is useful as an electric mobility.

### Reference Signs List

10: Laminate
11: PP sheet
12: Glass fiber mat
13: PP sheet
20: Laminate
21: PP sheet
22: Glass fiber mat
23: Alumina fiber mat
24: PP sheet
100: Structure (battery)
110: Battery module
120: Battery pack
130: Battery housing
200: Stampable sheet
210: Polypropylene sheet
210': Polypropylene sheet
210": Polypropylene sheet
220: Alumina fiber mat
230: Glass fiber mat

## Claims

1. A stampable sheet comprising (A) a thermoplastic resin, (B) a flame retardant, (C) a dispersant, and (D) an inorganic fiber, wherein the (D) inorganic fiber has a content of 1 to 80% by mass based on a total weight, and the (C) dispersant has a content of more than 0 and 25 parts by mass or less, based on 100 parts by mass of the (B) flame retardant.

2. The stampable sheet according to claim 1, wherein the (C) dispersant is a copolymer of an α-olefin and an unsaturated carboxylic acid.

3. The stampable sheet according to claim 1 or 2, wherein the (B) flame retardant is a phosphorus-based flame retardant.

4. The stampable sheet according to any one of claims 1 to 3, wherein the (B) flame retardant is an intumescent flame retardant.

5. The stampable sheet according to any one of claims 1 to 4, wherein the (D) inorganic fiber has an average fiber length of 0.1 mm or more.

6. The stampable sheet according to any one of claims 1 to 5, wherein the (D) inorganic fiber is at least one selected from glass fiber, ceramic fiber, metal fiber and metal oxide fiber.

7. The stampable sheet according to any one of claims 1 to 6, wherein the (A) thermoplastic resin is (A-1) a polypropylene-based resin, and the polypropylene-based resin has a content of 15 to 80% by mass based on the total weight.

8. The stampable sheet according to any one of claims 1 to 7, wherein the (B) flame retardant has a content of 1 to 30% by mass based on the total weight.

9. The stampable sheet according to any one of claims 1 to 8, obtained by impregnating a mat consisting of the (D) inorganic fiber with a resin composition containing the (A) thermoplastic resin, the (B) flame retardant, and the (C) dispersant.

10. The stampable sheet according to claim 9, wherein the mat is produced by needle punching a swirl (spiral) mat of a continuous glass or inorganic fiber.

11. A molded article obtained by stamping the stampable sheet according to any one of claims 1 to 10.

12. A battery housing made of the molded article according to claim 11.

13. A stampable sheet comprising (A-1) a polypropylene-based resin, (B) a flame retardant, (C) a dispersant, and (D) an inorganic fiber, wherein the (A) polypropylene-based resin has a content of 15 to 80% by mass, the (B) flame retardant has a content of 1 to 30% by mass, the (D) inorganic fiber has a content of 3 to 60% by mass, and based on 100 parts by mass of the (B) flame retardant, the (C) dispersant has a content of 0.01 to 10 parts by mass.
